# EUROPEAN PATENT APPLICATION

(11) **EP 4 629 465 A1**
(43) Date of publication of application: **08.10.2025**
(21) Application number: 24769843.4
(22) Date of filing: 07.03.2024
(51) Int. Cl.: H02J 3/32

(54) **ENERGY STORAGE SYSTEM AND ENERGY STORAGE MANAGEMENT SYSTEM**

(30) Priority: 16.03.2023 CN 202310280638
(71) Applicant: Huawei Digital Power Technologies Co., Ltd., Shenzhen, Guangdong 518043 (CN)
(72) Inventor: YU, Shijiang, Shenzhen, Guangdong 518043 (CN); ZHU, Junwei, Shenzhen, Guangdong 518043 (CN); CHEN, Baoguo, Shenzhen, Guangdong 518043 (CN)
(74) Representative: Gill Jennings & Every LLP
(86) International application number: PCT/CN2024/080565
(87) International publication number: WO 2024/188150

(57) **Abstract**

This application provides an energy storage system and an energy storage management system. The energy storage system includes an energy storage unit, a DC/DC conversion circuit, a controllable switching transistor, a power conversion system, and a control unit. The control unit is configured to: when a voltage of the energy storage unit is greater than a voltage peak of an end that is of the power conversion system and that is configured to connect to a grid connection point, control the controllable switching transistor to be bidirectionally turned-on, so that the DC/DC conversion circuit stops working. The power conversion system is configured to charge or discharge the energy storage unit by using the controllable switching transistor. The control unit is further configured to: when the voltage of the energy storage unit is less than the voltage peak of the end that is of the power conversion system and that is configured to connect to the grid connection point, control the controllable switching transistor to be turned off, to charge or discharge the energy storage unit by using the DC/DC conversion circuit and the power conversion system. According to embodiments of this application, working efficiency of the energy storage system can be improved.

## Description

This application claims priority to Chinese Patent Application No. 202310280638.4, filed with the China National Intellectual Property Administration on March 16, 2023 and entitled "ENERGY STORAGE SYSTEM AND ENERGY STORAGE MANAGEMENT SYSTEM", which is incorporated herein by reference in its entirety.

### TECHNICAL FIELD

This application relates to the field of battery energy storage technologies, and specifically, to an energy storage system and an energy storage management system.

### BACKGROUND

As a proportion of new energy gradually increases, configuration of an energy storage system becomes increasingly important. The energy storage system can implement power grid frequency modulation and peak shaving through charging and discharging control. The energy storage system mainly includes a battery rack, performs conversion of an alternating current and a direct current by using a power conversion system (PCS) to control charging and discharging processes of the battery rack, and can directly supply power to an alternating current load when there is no power grid. Because the power conversion system is configured to connect to a power grid, in the charging and discharging processes, a voltage at an end that is of the power conversion system and that is connected to the power grid fluctuates within a large range. If the voltage is greater than a voltage that can be provided by the battery rack, the power conversion system cannot work, and therefore working efficiency of the energy storage system is reduced.

### SUMMARY

This application provides an energy storage system, to improve working efficiency of the energy storage system.

According to a first aspect, this application provides an energy storage system. The energy storage system includes an energy storage unit, a DC/DC conversion circuit, a controllable switching transistor, a power conversion system, and a control unit.

A first end of the controllable switching transistor is connected to the energy storage unit, a second end of the controllable switching transistor is connected to a first end of the power conversion system, a first end of the DC/DC conversion circuit is connected to the energy storage unit, a second end of the DC/DC conversion circuit is connected to the first end of the power conversion system, a second end of the power conversion system is configured to connect to a grid connection point, and the power conversion system is configured to connect to a power grid or a load through the grid connection point.

The control unit is configured to: when an output voltage of the energy storage unit is continuously greater than a voltage peak at the second end of the power conversion system in a first time period, control, in a second time period, the controllable switching transistor to be turned on, so that the DC/DC conversion circuit stops working, to charge or discharge the energy storage unit by using the power conversion system.

The control unit is configured to: when the output voltage of the energy storage unit is less than the voltage peak at the second end of the power conversion system in a third time period, control the controllable switching transistor to be turned off, to charge or discharge the energy storage unit by using the power conversion system and the DC/DC conversion circuit. A time sequence is from the first time period to the second time period and then to the third time period.

Optionally, the controllable switching transistor is an insulated gate bipolar transistor IGBT, or a relay, or a contactor, or a circuit formed by connecting an IGBT and a diode in parallel. Optionally, the energy storage unit is a battery rack.

Optionally, the foregoing DC/DC conversion circuit is a bidirectional DC/DC conversion circuit, and/or the foregoing power conversion system is a bidirectional power conversion system. The foregoing DC/DC conversion circuit includes a boost circuit or a buck-boost circuit.

In this solution, the second end of the power conversion system inputs or outputs an alternating current, and there is a voltage peak. When the voltage of the energy storage unit is greater than the voltage peak at the second end of the power conversion system, the controllable switching transistor is turned on, so that the voltage of the energy storage unit is output to the bidirectional power conversion system by using the controllable switching transistor. Because resistance of the turned-on controllable switching transistor is quite small, and extra power overheads are also quite small and may even be ignored, power overheads of a circuit can be reduced. In addition, because the controllable switching transistor may be bidirectionally turned-on, the bidirectional power conversion system can not only discharge the energy storage unit, but also charge the energy storage unit. Therefore, the bidirectional power conversion system can be fully used, so that a rated output working voltage of the bidirectional power conversion system can be maintained at a high value, and the bidirectional power conversion system is in a high-efficiency working mode, thereby improving working efficiency of the energy storage system.

In addition, when the voltage of the energy storage unit is less than the voltage peak at the second end of the power conversion system, the controllable switching transistor is turned off, so that the output voltage of the energy storage unit can be increased by using the DC/DC conversion circuit; and an increased voltage is output to the bidirectional power conversion system, so that the bidirectional power conversion system can work normally. That is, in this implementation, it is ensured that the energy storage unit can still work when the energy storage unit is at a low voltage, and energy of the energy storage unit is fully utilized. In addition, it is ensured that the bidirectional power conversion system can still work when the energy storage unit is at the low voltage, the bidirectional power conversion system is fully used, and working efficiency of the energy storage system is improved.

In other words, in comparison with an existing implementation solution in which the working efficiency of the energy storage system is reduced because the energy storage unit cannot work when the voltage of the energy storage unit is less than the voltage peak at the second end of the power conversion system, in this solution, the energy storage system can work normally regardless of whether the voltage of the energy storage unit is greater than the voltage peak at the second end of the power conversion system or the voltage of the energy storage unit is less than the voltage peak at the second end of the power conversion system, thereby improving the working efficiency of the energy storage system. In addition, regardless of whether the voltage of the energy storage unit is greater than the voltage peak at the second end of the power conversion system or the voltage of the energy storage unit is less than the voltage peak at the second end of the power conversion system, charging and discharging of the energy storage unit can be implemented, thereby further optimizing the working efficiency of the energy storage system.

In a possible implementation, the control unit is further configured to: when the controllable switching transistor is turned on in the second time period, control the power conversion system to perform rectification conversion on a voltage at the second end of the power conversion system, so that a voltage at the second end of the controllable switching transistor is greater than the output voltage of the energy storage unit, to charge the energy storage unit by using the controllable switching transistor.

Optionally, when the output voltage of the energy storage unit is less than the voltage at the second end of the controllable switching transistor and the voltage at the second end of the controllable switching transistor is less than a voltage at the first end of the power conversion system, the power conversion system is configured to charge the energy storage unit.

In another possible implementation, the control unit is further configured to: when the controllable switching transistor is turned on in the second time period, control the power conversion system to perform inversion conversion on the voltage at the first end of the power conversion system, so that the output voltage of the energy storage unit is greater than the voltage at the second end of the controllable switching transistor, to discharge the energy storage unit by using the controllable switching transistor.

Optionally, when the output voltage of the energy storage unit is greater than the voltage at the second end of the controllable switching transistor and the voltage at the second end of the controllable switching transistor is greater than the voltage at the first end of the power conversion system, the power conversion system is configured to discharge the energy storage unit.

In this solution, when the output voltage of the energy storage unit is greater than the voltage peak at the second end of the power conversion system, the controllable switching transistor is turned on, so that the voltage of the energy storage unit is output to the bidirectional power conversion system by using the controllable switching transistor. Because the controllable switching transistor may be bidirectionally turned-on, the bidirectional power conversion system can not only discharge the energy storage unit, but also charge the energy storage unit. In this way, when the energy of the energy storage unit is insufficient, the energy can be supplemented in time, or when electric energy of the power grid is excessive, the electric energy is recycled and stored in the energy storage unit, thereby effectively implementing balance between use and storage of the electric energy.

In a possible implementation, the control unit is further configured to: when the controllable switching transistor is turned off in the third time period, control the DC/DC conversion circuit to perform buck conversion on the voltage at the first end of the power conversion system and output a reduced voltage to the energy storage unit, to charge the energy storage unit.

Optionally, when the voltage at the second end of the DC/DC conversion circuit is less than the voltage at the first end of the power conversion system, the power conversion system is configured to charge the energy storage unit.

The control unit is further configured to: when the controllable switching transistor is turned off in the third time period, control the DC/DC conversion circuit to perform boost conversion on the output voltage of the energy storage unit and output an increased voltage to the power conversion system, to discharge the energy storage unit.

Optionally, when the voltage at the second end of the DC/DC conversion circuit is greater than the voltage at the first end of the power conversion system, the power conversion system is configured to discharge the energy storage unit.

In this solution, when the voltage of the energy storage unit is less than the voltage at the second end of the power conversion system, the output voltage of the energy storage unit is increased to be greater than the voltage at the second end of the power conversion system by using the DC/DC conversion circuit. In this way, the power conversion system can work normally, and it is ensured that energy can still be output to the power grid when the energy storage unit is at the low voltage, thereby ensuring sufficient power consumption of the power grid. In addition, the output voltage of the energy storage unit is increased to a voltage greater than the voltage at the second end of the power conversion system by using the DC/DC conversion circuit, so that after the power conversion system can work normally, the energy storage unit may be further charged. Specifically, buck conversion is performed on the voltage at the first end of the power conversion system, and the reduced voltage is output to the energy storage unit, to charge the energy storage unit. In this way, electric energy of the energy storage unit is supplemented in time or electric energy of the power grid is recycled for storage, to balance use and storage of the electric energy, thereby effectively meeting a power consumption requirement of the power grid.

In a possible implementation, when a transient overvoltage occurs in the voltage at the second end of the power conversion system, the control unit is configured to control the controllable switching transistor to be turned off. For example, the DC/DC conversion circuit is further configured to increase the output voltage of the energy storage unit, and output an increased voltage to the power conversion system. The power conversion system is configured to charge or discharge the energy storage unit based on the increased voltage.

In this solution, when the transient overvoltage occurs in the voltage at the second end of the power conversion system, the controllable switching transistor is quickly turned off, so that the output voltage of the energy storage unit can be increased by using the DC/DC conversion circuit while the voltage at the second end of the power conversion system is prevented from backfeeding energy to the energy storage unit; and the increased voltage is output to the power conversion system, so that the power conversion system can work normally. In other words, in this implementation, the controllable switching transistor cooperates with the DC/DC conversion circuit, to implement high voltage ride through, that is, the energy storage system can still work normally and can output power in a case of a transient overvoltage, thereby meeting compliance that the power grid is not disconnected from the grid due to abnormal fluctuation.

In a possible implementation, the energy storage system further includes a voltage detection circuit.

The voltage detection circuit is configured to detect the voltage of the energy storage unit and the voltage at the second end of the power conversion system.

The voltage detection circuit is further configured to output the detected voltage to the control unit.

In this solution, the voltage of the energy storage unit and the voltage at the second end of the power conversion system are quickly detected by using the detection circuit, so that a corresponding control response is quickly made based on values of the two voltages, to ensure that the energy storage system works normally.

In a possible implementation, the energy storage system further includes a fault detection circuit, and the fault detection circuit is configured to: detect a short-circuit fault of the energy storage unit, and after detecting the short-circuit fault, indicate the control unit to turn off the controllable switching transistor. Optionally, the fault detection circuit is a desaturation detection circuit. For example, the controllable switching transistor is an insulated gate bipolar transistor IGBT or a device formed by connecting an IGBT and a diode in parallel, and the fault detection circuit is a desaturation detection circuit. When a voltage between a collector and an emitter of the IGBT is greater than a preset voltage threshold, the control unit is configured to control the IGBT to be turned off.

In this solution, the fault detection circuit detects a short-circuit fault, and then indicates to quickly turn off the controllable switching transistor, so that a main loop can be quickly turned off when the short-circuit fault occurs, thereby reducing impact spread of the fault and reducing other dangers caused by the fault.

In a possible implementation, the energy storage system further includes a second DC/DC conversion circuit and a second controllable switching transistor. The second DC/DC conversion circuit and the second controllable switching transistor are connected in parallel to form a second parallel circuit, and the second parallel circuit is configured to be connected between a second energy storage unit and the power conversion system.

In this solution, the controllable switching transistor cooperates with the DC/DC conversion circuit, to improve working efficiency of the power conversion system. This can implement energy conversion between a plurality of energy storage units and the power grid, thereby expanding an application scenario and having high practicability.

According to a second aspect, this application provides an energy storage management system. The energy storage management system includes a DC/DC conversion circuit, a controllable switching transistor, a power conversion system, and a control unit.

A first end of the controllable switching transistor is configured to connect to an energy storage power supply, a second end of the controllable switching transistor is connected to a first end of the power conversion system, a first end of the DC/DC conversion circuit is connected to the energy storage power supply, a second end of the DC/DC conversion circuit is connected to the first end of the power conversion system, a second end of the power conversion system is configured to connect to a grid connection point, and the power conversion system is configured to connect to a power grid or a load through the grid connection point.

The control unit is configured to: when an output voltage of the energy storage power supply is continuously greater than a voltage peak at the second end of the power conversion system in a first time period, control, in a second time period, the controllable switching transistor to be turned on, so that the DC/DC conversion circuit stops working, to charge or discharge the energy storage power supply by using the power conversion system.

The control unit is configured to: when the output voltage of the energy storage power supply is less than the voltage peak at the second end of the power conversion system in a third time period, control the controllable switching transistor to be turned off, to charge or discharge the energy storage power supply by using the power conversion system and the DC/DC conversion circuit. A time sequence is from the first time period to the second time period and then to the third time period.

In a possible implementation, the control unit is further configured to: when the controllable switching transistor is turned on in the second time period, control the power conversion system to perform rectification conversion on the voltage at the second end of the power conversion system, so that a voltage at the second end of the controllable switching transistor is greater than the output voltage of the energy storage power supply, to charge the energy storage unit by using the controllable switching transistor.

For beneficial effects of the second aspect, refer to the descriptions of the first aspect. Details are not described herein again.

### BRIEF DESCRIPTION OF DRAWINGS

FIG. 1 is a diagram of a structure of an energy storage system;
FIG. 2 is a diagram of voltage fluctuation;
FIG. 3 to FIG. 7 each are a diagram of a structure of an energy storage system according to an embodiment of this application;
FIG. 8 is a schematic flowchart according to an embodiment of this application;
FIG. 9 is a boost effect diagram according to an embodiment of this application;
FIG. 10 is a schematic flowchart according to an embodiment of this application;
FIG. 11 is a boost effect diagram according to an embodiment of this application;
FIG. 12 to FIG. 14 each are a diagram of a structure of an energy storage system according to an embodiment of this application;
FIG. 15 to FIG. 31 each are a schematic of a circuit structure of an energy storage system according to an embodiment of this application; and
FIG. 32 is a diagram of a structure of an energy storage management system according to an embodiment of this application.

### DESCRIPTION OF EMBODIMENTS

In embodiments of this application, "a plurality of" means two or more than two. In embodiments of this application, "and/or" is used to describe an association relationship between associated objects, and represents three relationships that may exist independently. For example, A and/or B may represent the following: Only A exists, only B exists, or both A and B exist. A description manner such as "at least one item (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" includes cases of a single a, a single b, a single c, a combination of a and b, a combination of a and c, a combination of b and c, or a combination of a, b, and c.

In embodiments of this application, a connection between C and D indicates a circuit connection between C and D, and indicates that electrical signal transmission can be implemented between C and D.

In embodiments of this application, unless otherwise stated or there is a logical conflict, terms and/or descriptions in various embodiments are consistent and may be mutually referenced, and technical features in different embodiments may be combined based on an internal logical relationship thereof, to form a new embodiment.

The following describes embodiments of this application by using examples with reference to the accompanying drawings.

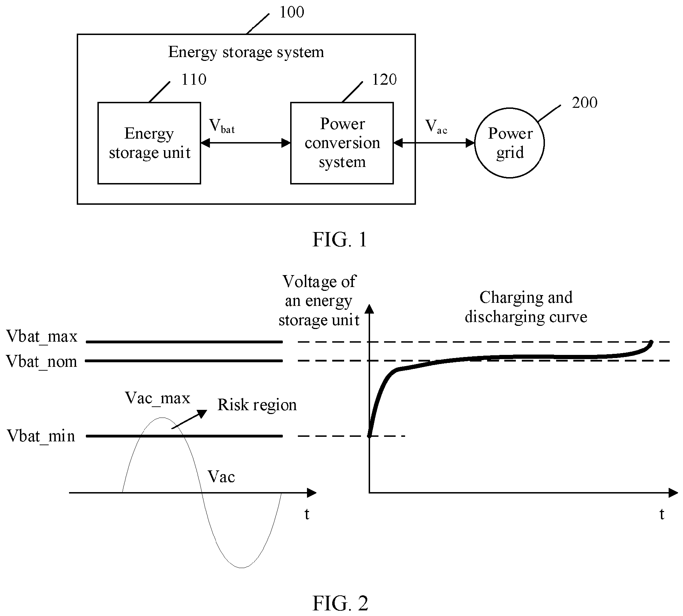

For example, FIG. 1 is a diagram of a structure of an energy storage system according to an embodiment of this application. The energy storage system 100 shown in FIG. 1 includes an energy storage unit 110 and a power conversion system 120. The energy storage unit 110 is connected to the power conversion system 120, and implements charging and discharging by using the power conversion system 120.

For example, the power conversion system 120 may be connected to a power grid 200. Specifically, the power conversion system 120 may perform power conversion on direct current energy from the energy storage unit 110, and then output alternating current energy to the power grid 200, to supply power to the power grid 200. Alternatively, the power conversion system 120 may perform power conversion on alternating current energy from the power grid 200, and then output direct current energy to the energy storage unit 110, to charge the energy storage unit 110.

For example, the energy storage unit 110 may be a battery rack. The battery rack may include one or more batteries connected in series or in parallel. The battery may include, for example, a lithium-ion battery (for example, a lithium iron phosphate battery or a ternary lithium battery), a lead-acid battery (or referred to as a lead-acid storage battery), a sodium battery, or the like. A specific type of the battery is not specifically limited in this application.

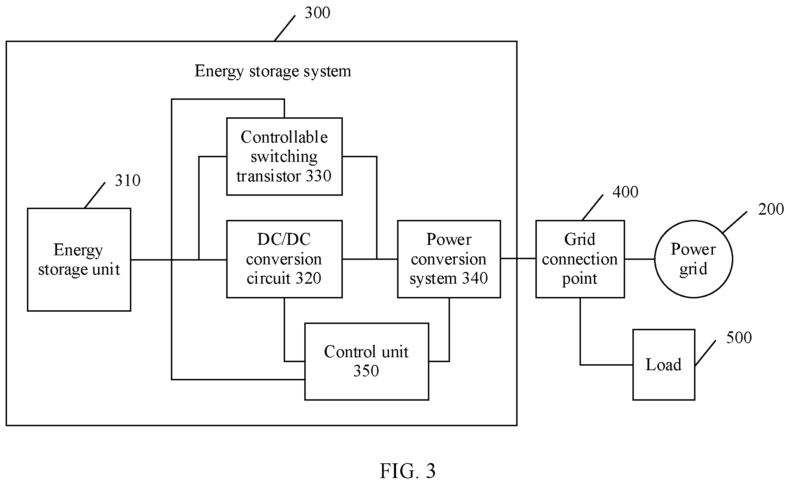

In specific implementation, the power conversion system 120 implements mutual conversion between a direct current voltage Vbat of the energy storage unit 110 and a voltage Vac at an end that is of the power conversion system and that is connected to the power grid, to store or release electric energy in the energy storage unit 110, that is, charge or discharge the energy storage unit 110. However, in charging and discharging processes, the voltage Vac fluctuates within a large range. For example, as shown in FIG. 2, when the voltage Vbat of the energy storage unit 110 is less than the voltage Vac (for example, referring to a risk region in FIG. 2), the power conversion system 120 cannot work, and therefore working efficiency of the power conversion system 120 is reduced. To resolve this problem, an embodiment of this application provides an energy storage system. For example, refer to FIG. 3.

For example, in FIG. 3, the energy storage system 300 may include an energy storage unit 310, a DC/DC conversion circuit 320, a controllable switching transistor 330, a power conversion system 340, and a control unit 350. The DC/DC conversion circuit 320 is connected in parallel to the controllable switching transistor 330 to form a parallel circuit. The parallel circuit is configured to connect between the energy storage unit 310 and the power conversion system 340. To be specific, one end of the DC/DC conversion circuit 320 (referred to as a first end of the DC/DC conversion circuit) is connected to the energy storage unit 310, and the other end of the DC/DC conversion circuit 320 (referred to as a second end of the DC/DC conversion circuit) is connected to the power conversion system 340. One end of the controllable switching transistor 330 (referred to as a first end of the controllable switching transistor) is connected to the energy storage unit 310, and the other end of the controllable switching transistor 330 (referred to as a second end of the controllable switching transistor) is connected to one end of the power conversion system 340 (referred to as a first end of the power conversion system). The other end of the power conversion system 340 (referred to as a second end of the power conversion system) is further configured to connect to a grid connection point 400. The power conversion system 340 is connected to a power grid 200 and/or a load 500 through the grid connection point 400. The control unit 350 may be connected to the DC/DC conversion circuit 320, the controllable switching transistor 330, and the power conversion system 340.

The DC/DC conversion circuit 320 may be configured to increase an output voltage of the energy storage unit 310. In specific implementation, the DC/DC conversion circuit 320 may be any direct current DC/DC conversion circuit. This is not limited in this embodiment of this application.

In a possible implementation, the DC/DC conversion circuit may further include a buck circuit, configured to decrease an input direct current voltage and then output a decreased voltage. In other words, the DC/DC conversion circuit includes a buck-boost circuit. For example, the DC/DC conversion circuit may be a bidirectional DC/DC conversion circuit.

The controllable switching transistor 330 may be configured to bypass the DC/DC conversion circuit 320. For example, the controllable switching transistor 330 may be a switching device. After the controllable switching transistor is turned on, bidirectional flow of a current can be implemented. In other words, the controllable switching transistor can be bidirectionally turned on. For example, the controllable switching transistor may be a bidirectionally turned-on switching device such as a field-effect transistor, a relay, or a contactor. In a possible implementation, the field-effect transistor may be, for example, an insulated-gate bipolar transistor (insulate-gate bipolar transistor, IGBT). It may be understood that the description herein is merely an example, and does not constitute a limitation on this embodiment of this application.

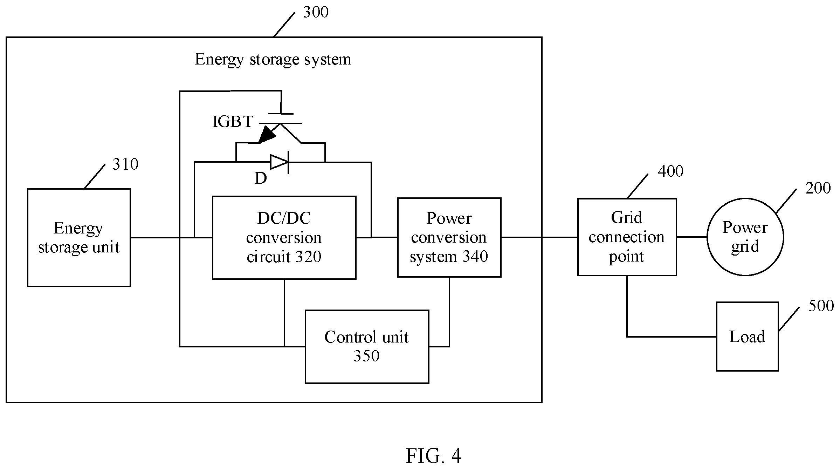

In another possible implementation, for example, as shown in FIG. 4, the controllable switching transistor 330 may be a parallel circuit of an IGBT and a diode D. Specifically, an emitter (E) of the IGBT is connected to an anode of the diode, a collector (C) of the IGBT is connected to a cathode of the diode D, and a gate (G) of the IGBT is connected to the control unit 350. The emitter of the IGBT and the anode of the diode are further connected to the energy storage unit 310 and the DC/DC conversion circuit. The collector of the IGBT and the cathode of the diode D are further connected to the DC/DC conversion circuit and the power conversion system 340.

The power conversion system 340 may be configured to convert direct current energy into alternating current energy, or configured to convert alternating current energy into direct current energy. For example, the power conversion system 340 is a bidirectional power conversion system.

The control unit 350 may be configured to control working statuses of the DC/DC conversion circuit 320, the controllable switching transistor 330, and the power conversion system 340.

It may be understood that the structures of the energy storage system 100 shown in FIG. 3 and FIG. 4 are merely examples. In specific implementation, another circuit or component may be further included. This is not limited in this embodiment of this application.

The following describes an example of a working principle of the energy storage system 300 with reference to FIG. 3 or FIG. 4.

In a possible implementation, when the output voltage of the energy storage unit 310 is greater than a voltage peak at the second end of the power conversion system 340, the control unit 350 is configured to control the controllable switching transistor 330 to be turned on.

When the second end of the power conversion system 340 is configured to connect to the power grid 200, a voltage at the second end of the power conversion system 340 may also be considered as a voltage of the power grid 200.

For example, when the output voltage of the energy storage unit 310 is continuously greater than the voltage peak at the second end of the power conversion system 340 in a first time period, the controllable switching transistor 330 is controlled to be turned on in a second time period, so that the DC/DC conversion circuit 320 stops working, to charge or discharge the energy storage unit 310 by using the power conversion system 340.

For example, the first time period may be, for example, a power frequency period, or may be a preset duration, for example, 0.5 seconds or 1 second. This is not limited in this embodiment of this application. For example, the second time period may be a response duration of the controllable switching transistor 330, or may be a preset duration, for example, may be 1 millisecond or 2 milliseconds. This is not limited in this embodiment of this application.

For example, in specific implementation, the control unit 350 may obtain a voltage of the energy storage unit 310 and the voltage peak at the second end of the power conversion system 340. Then, magnitudes of the two voltages are compared, and turning on or off of the controllable switching transistor 330 is controlled based on a comparison result.

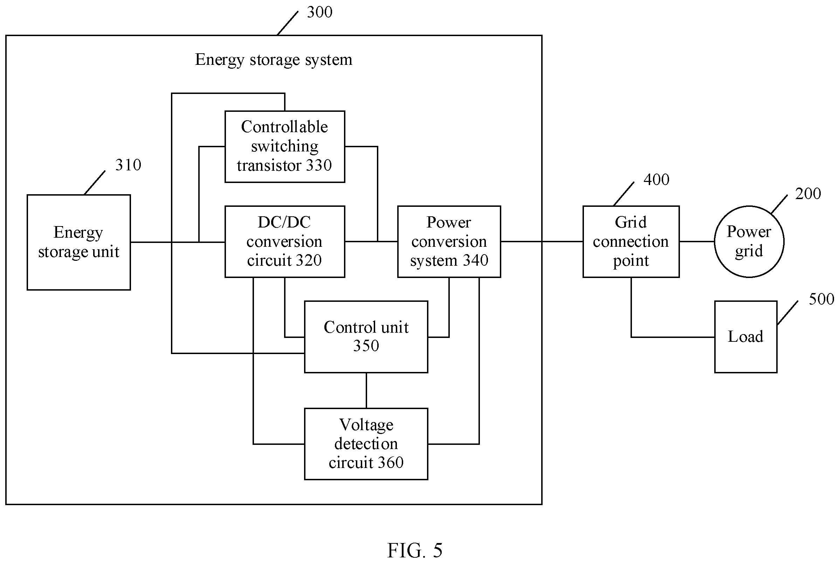

In a possible implementation, for example, as shown in FIG. 5, the energy storage system 300 includes a voltage detection circuit 360. The voltage detection circuit 360 can detect the voltage of the energy storage unit 310 and the voltage at the second end of the power conversion system 340. Then, the detected voltage of the energy storage unit 310 and the detected voltage at the second end of the power conversion system 340 are sent to the control unit 350. The voltage detection circuit 360 may be implemented in any possible implementation. This is not limited in this embodiment of this application. In a possible implementation, the control unit 350 and the voltage detection circuit may be integrated into one chip for implementation, or may be separately designed for implementation. This is not limited in this embodiment of this application.

In another possible implementation, the DC/DC conversion circuit 320 may include a voltage detection circuit. The voltage detection circuit may be configured to: detect the voltage of the energy storage unit 310, and send the detected voltage to the control unit 350. In addition, the power conversion system 340 may also include a voltage detection circuit. The voltage detection circuit may be configured to: detect the voltage at the second end of the power conversion system 340, and send the detected voltage to the control unit 350. In this solution, a voltage is detected by using the voltage detection circuit built in the DC/DC conversion circuit 320 and/or the power conversion system 340, and there is no need to additionally dispose the voltage detection circuit shown in FIG. 5, thereby reducing costs and reducing a chip area.

In a possible implementation, that the voltage of the energy storage unit 310 is greater than the voltage at the second end of the power conversion system 340 may be that the voltage of the energy storage unit 310 is greater than a maximum value of the voltage at the second end of the power conversion system. Because the voltage at the second end of the power conversion system is an alternating current voltage and fluctuates, there is the maximum voltage. The maximum voltage may be, for example, Vac_max shown in FIG. 2.

Based on the foregoing description, it can be learned that the controllable switching transistor 330 is a switching device, and the control unit 350 may send a control signal to the controllable switching transistor 330 to control turning on or off of the controllable switching transistor 330. When the control unit 350 determines, through comparison, that the voltage of the energy storage unit 310 is greater than the voltage at the second end of the power conversion system 340, the control unit 350 sends a control signal to the controllable switching transistor 330 to control the controllable switching transistor 330 to be turned on.

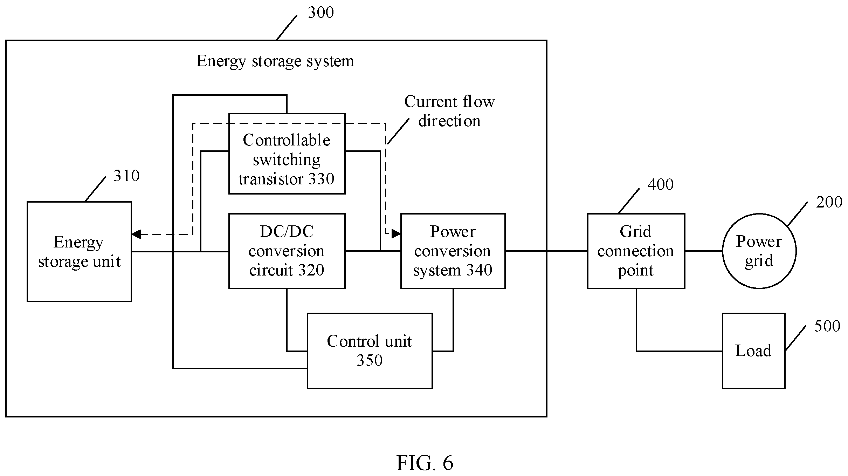

Because the controllable switching transistor 330 and the DC/DC conversion circuit 320 are connected in parallel, and the controllable switching transistor 330 is a switching device, resistance generated after the controllable switching transistor 330 is turned on is small, and therefore the controllable switching transistor 330 is equivalent to a conducting wire. Therefore, after the controllable switching transistor 330 is turned on, for example, as shown in FIG. 6, a current flows through the controllable switching transistor 330, but does not flow through the DC/DC conversion circuit 320. In this case, the DC/DC conversion circuit 320 stops working. In another possible implementation, when controlling the controllable switching transistor 330 to be turned on, the control unit 350 may further send a control signal to the DC/DC conversion circuit 320 to indicate the DC/DC conversion circuit 320 to stop working.

After the controllable switching transistor 330 is turned on, the power conversion system 340 may charge or discharge the energy storage unit 310 by using the controllable switching transistor 330. In a possible implementation, when controlling the controllable switching transistor 330 to be turned on, the control unit 350 may further send a control signal to the power conversion system 340 to indicate the power conversion system 340 to start working.

For example, in specific implementation, after the controllable switching transistor 330 is turned on, the voltage of the energy storage unit 310 is output to the power conversion system 340 through the controllable switching transistor 330. Because the voltage of the energy storage unit 310 is greater than the voltage peak at the second end of the power conversion system 340, the power conversion system 340 may work normally. In addition, because the controllable switching transistor 330 may be bidirectionally turned-on, the power conversion system 340 can discharge the energy storage unit 310, that is, can convert direct current energy in the energy storage unit 310 into alternating current energy and output the alternating current energy to the power grid 200 or the load 500 for use. The power conversion system 340 may further charge the energy storage unit 310, that is, convert alternating current energy from the power grid 200 or the load 500 into direct current energy and provide the direct current energy for the energy storage unit 310, to charge the energy storage unit 310.

In the foregoing implementation, when the voltage of the energy storage unit 310 is greater than the voltage peak at the second end of the power conversion system 340, the controllable switching transistor 330 is turned on, so that the voltage of the energy storage unit 310 is output to the power conversion system 340 by using the controllable switching transistor 330. Because the resistance of the turned-on controllable switching transistor 330 is quite small, and extra power overheads are also quite small and may even be ignored, power overheads of a circuit can be reduced. In addition, because the controllable switching transistor 330 may be bidirectionally turned-on, the power conversion system 340 can not only discharge the energy storage unit 310, but also charge the energy storage unit 310. Therefore, the power conversion system 340 can be fully used, so that a rated output working voltage of the power conversion system 340 can be maintained at a high value, and the power conversion system 340 is in a high-efficiency working mode, thereby improving working efficiency of the energy storage system.

In a possible implementation, when the voltage of the energy storage unit 310 is less than the voltage peak at the second end of the power conversion system 340, the control unit 350 is configured to control the controllable switching transistor 330 to be turned off.

For example, when the output voltage of the energy storage unit 310 is less than the voltage peak at the second end of the power conversion system 340 in a third time period, the controllable switching transistor 330 is controlled to be turned off, to charge or discharge the energy storage unit 310 by using the power conversion system 340 and the DC/DC conversion circuit 320.

For example, the third time period may be, for example, a power frequency period, or may be a preset duration, for example, 0.5 seconds or 1 second. This is not limited in this embodiment of this application.

In a possible implementation, a sequence of the first time period, the second time period, and the third time period is from the first time period to the second time period and then to the third time period.

For example, in specific implementation, after obtaining the voltage of the energy storage unit 310 and the voltage at the second end of the power conversion system 340, when the control unit 350 determines, through comparison, that the voltage of the energy storage unit 310 is less than the voltage at the second end of the power conversion system 340, the control unit 350 sends a control signal to the controllable switching transistor 330 to control the controllable switching transistor 330 to be turned off.

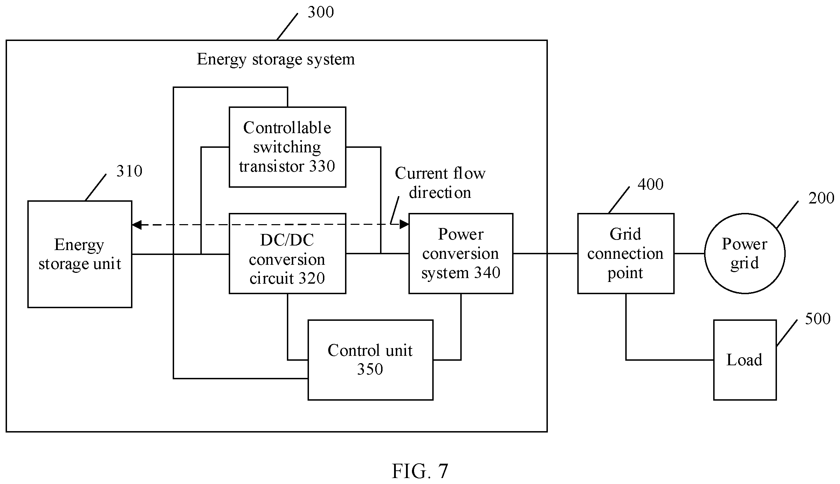

After the controllable switching transistor 330 is turned off, for example, as shown in FIG. 7, the voltage of the energy storage unit 310 is output to the DC/DC conversion circuit 320, and a current flows through the DC/DC conversion circuit 320, so that the DC/DC conversion circuit 320 starts working. In another possible implementation, when controlling the controllable switching transistor 330 to be turned off, the control unit 350 may further send a control signal to the DC/DC conversion circuit 320 to indicate the DC/DC conversion circuit 320 to start working.

For example, in specific implementation, after the DC/DC conversion circuit 320 starts working, the output voltage of the energy storage unit 310 may be increased and then output an increased voltage to the power conversion system 340. The increased voltage is greater than the voltage at the second end of the power conversion system 340.

In a possible implementation, the output voltage of the energy storage unit 310 may be increased to be equal to a bus voltage.

Alternatively, in another possible implementation, the control unit 350 may record a maximum voltage (for example, Vac_max shown in FIG. 2) of the voltage at the second end of the power conversion system 340. Then, when it is determined, through comparison, that a latest detected voltage of the energy storage unit 310 is less than a latest detected voltage at the second end of the power conversion system 340, the DC/DC conversion circuit 320 is controlled to increase the output voltage of the energy storage unit 310. An increased voltage is greater than the recorded voltage peak at the second end of the power conversion system 340.

After the DC/DC conversion circuit 320 outputs the increased voltage to the power conversion system 340, because the increased voltage is greater than the maximum voltage at the second end of the power conversion system 340, the power conversion system 340 may work normally. In a possible implementation, when controlling the controllable switching transistor 330 to be turned off, the control unit 350 may further send a control signal to the power conversion system 340 to indicate the power conversion system 340 to start working.

In a possible implementation, the DC/DC conversion circuit 320 is a bidirectional DC/DC conversion circuit, that is, may be bidirectionally turned-on. Therefore, the power conversion system 340 may charge or discharge the energy storage unit 310.

For example, in a process in which the power conversion system 340 discharges the energy storage unit 310, the voltage of the energy storage unit 310 is output to the DC/DC conversion circuit 320, the DC/DC conversion circuit 320 outputs the increased voltage to the power conversion system 340, and the power conversion system 340 converts direct current energy from the DC/DC conversion circuit 320 into alternating current energy and outputs the alternating current energy to the power grid 200 or the load 500.

For example, in a process in which the power conversion system 340 charges the energy storage unit 310, the power conversion system 340 converts alternating current energy from the power grid 200 or the load 500 into direct current energy. Then, the direct current energy is input to the energy storage unit 310 through the DC/DC conversion circuit 320, to charge the energy storage unit 310. For example, the DC/DC conversion circuit 320 may perform a voltage boosting operation on a voltage of the direct current energy, or may not perform a voltage boosting operation. This is not limited in this embodiment of this application.

In a possible implementation, the power conversion system 340 may charge or discharge the energy storage unit 310 by using the DC/DC conversion circuit.

For example, in a process in which the power conversion system 340 discharges the energy storage unit 310, the voltage of the energy storage unit 310 is output to the DC/DC conversion circuit, and the DC/DC conversion circuit increases, by using the DC/DC conversion circuit 320, the output voltage of the energy storage unit 310. The DC/DC conversion circuit outputs an increased voltage to the power conversion system 340, and the power conversion system 340 converts direct current energy from the DC/DC conversion circuit into alternating current energy and outputs the alternating current energy to the power grid 200 or the load 500.

For example, in a process in which the power conversion system 340 charges the energy storage unit 310, the power conversion system 340 converts alternating current energy from the power grid 200 or the load 500 into direct current energy. Then, the direct current energy is input to the energy storage unit 310 through the DC/DC conversion circuit, to charge the energy storage unit 310. For example, the DC/DC conversion circuit may perform direct current power conversion on the direct current energy and output the direct current energy to the energy storage unit 310.

In the foregoing implementation, when the voltage of the energy storage unit 310 is less than the voltage peak at the second end of the power conversion system 340, the controllable switching transistor 330 is turned off, so that the output voltage of the energy storage unit 310 can be increased by using the DC/DC conversion circuit 320; and the increased voltage is output to the power conversion system 340, so that the power conversion system 340 can work normally. That is, in this implementation, it is ensured that the energy storage unit can still work when the energy storage unit is at a low voltage, and energy of the energy storage unit is fully utilized. In addition, it is ensured that the power conversion system can still work when the energy storage unit is at the low voltage, the power conversion system is fully used, and working efficiency of the energy storage system is improved.

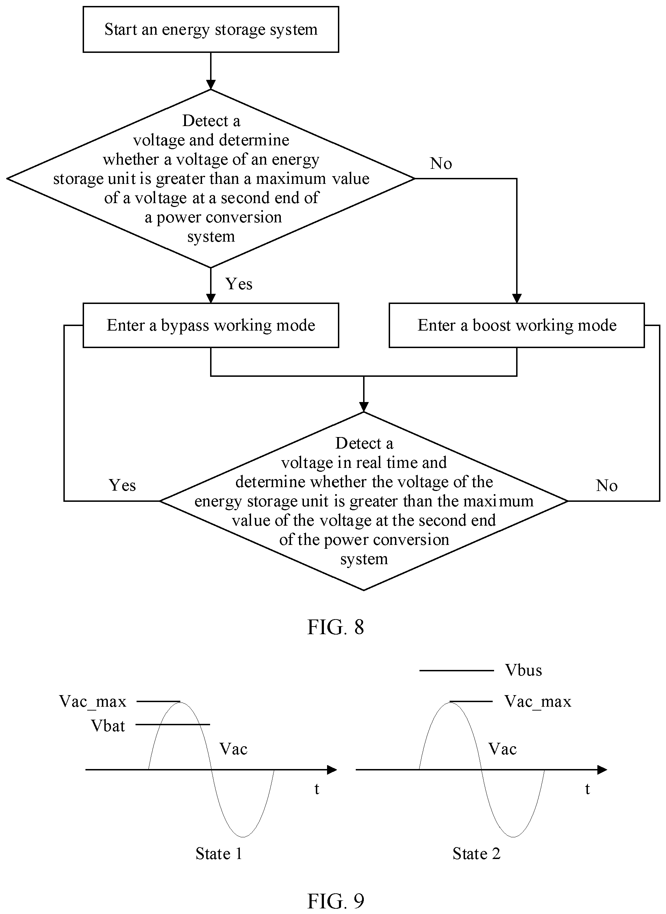

For ease of understanding of the foregoing implementation solution, the following describes an example with reference to FIG. 8. FIG. 8 shows an example of a working flowchart of the foregoing energy storage system. Specifically, after the energy storage system starts working, the voltage of the energy storage unit and the voltage at the second end of the power conversion system are detected, and whether the voltage of the energy storage unit is greater than the maximum value of the voltage at the second end of the power conversion system is determined. If the voltage of the energy storage unit is greater than the maximum value of the voltage at the second end of the power conversion system, the energy storage system enters a bypass working mode. For specific implementation, refer to the foregoing description when the voltage of the energy storage unit is greater than the voltage at the second end of the power conversion system. Details are not described herein again. If the voltage of the energy storage unit is not greater than the maximum value of the voltage at the second end of the power conversion system, the energy storage system enters a boost working mode. For specific implementation, refer to the foregoing description when the voltage of the energy storage unit is less than the voltage at the second end of the power conversion system. Details are not described herein again. After the energy storage system enters the bypass working mode or the boost working mode, the voltage of the energy storage unit and the voltage at the second end of the power conversion system are still detected in real time, and whether the voltage of the energy storage unit is greater than the maximum value of the voltage at the second end of the power conversion system is determined. Then, the corresponding working mode is entered based on a determining result. Details are not described herein.

In a possible implementation, for an effect diagram of the boost working mode, refer to FIG. 9. In FIG. 9, a state 1 is a state before the voltage is boosted. It can be seen that the voltage Vbat of the energy storage unit is less than the maximum value Vac_max of the voltage Vac at the second end of the power conversion system. Then, for a state obtained after the voltage is boosted by the DC/DC conversion circuit, refer to a state 2. In the state 2, Vbus is a boosted voltage, for example, may be a bus voltage. It can be learned that Vbus is greater than the maximum value Vac_max of the voltage Vac at the second end of the power conversion system. After the Vbus is input to the power conversion system, the power conversion system can work normally.

In a possible implementation, when a transient overvoltage occurs in the voltage at the second end of the power conversion system 340, the control unit 350 is configured to control the controllable switching transistor 330 to be turned off.

For example, in specific implementation, because a power grid fault or disturbance causes a rapid voltage increase to exceed a maximum value of a voltage at a second end of a normal power conversion system, a transient overvoltage occurs. If an increase amplitude of a rapidly increasing voltage compared with the maximum value of the voltage at the second end of the power conversion system is within a preset proportion, and the energy storage system can still work within a preset duration, this case may be referred to as high voltage ride through. The preset proportion may be, for example, 25% or 30%. The preset duration may be, for example, one minute or two minutes. Values of the preset proportion and the preset duration are not limited in this embodiment of this application.

For example, in specific implementation, after obtaining the voltage at the second end of the power conversion system 340, the control unit 350 may determine that a transient overvoltage occurs in the voltage at the second end of the power conversion system 340. For example, the voltage at the second end of the power conversion system 340 may be compared with a pre-stored maximum value of the voltage at the second end of the power conversion system. If the voltage at the second end of the power conversion system 340 is greater than the maximum value of the voltage at the second end of the power conversion system, it is determined that a transient overvoltage occurs in the voltage at the second end of the power conversion system 340. Then, the control unit 350 sends a control signal to the controllable switching transistor 330 to control the controllable switching transistor 330 to be turned off.

In a possible implementation, the controllable switching transistor 330 may be an IGBT. Because the transient overvoltage state is caused by rapid voltage increasing, a quick response is required. The IGBT has a fast response speed, and may reach a millisecond level. Therefore, after the control signal sent by the control unit 350 is received, the controllable switching transistor 330 may be quickly turned off, to ensure that the voltage at the second end of the power conversion system does not backfeed energy to the energy storage unit. It may be understood that the IGBT is merely an example. In specific implementation, the IGBT may be another switching device with a fast response speed. This is not limited in this embodiment of this application.

After the controllable switching transistor 330 is turned off, the voltage of the energy storage unit 310 is output to the DC/DC conversion circuit 320, and a current flows through the DC/DC conversion circuit 320, so that the DC/DC conversion circuit 320 starts working. In another possible implementation, when controlling the controllable switching transistor 330 to be turned off, the control unit 350 may further send a control signal to the DC/DC conversion circuit 320 to indicate the DC/DC conversion circuit 320 to start working.

For example, in specific implementation, after the DC/DC conversion circuit 320 starts working, the output voltage of the energy storage unit 310 may be increased and then output an increased voltage to the power conversion system 340. The increased voltage is greater than the voltage at the second end of the power conversion system 340 of the obtained transient overvoltage. In a possible implementation, the increased voltage may be, for example, a voltage whose increase amplitude is a preset proportion compared with the maximum voltage value at the second end of the power conversion system. That is, the output voltage of the energy storage unit 310 is increased, by using the DC/DC conversion circuit 320, to a voltage whose increase amplitude is higher than the maximum value of the voltage at the second end of the power conversion system by the preset proportion. After the DC/DC conversion circuit 320 outputs the increased voltage to the power conversion system 340, reference may be made to the foregoing description when the voltage of the energy storage unit 310 is less than the voltage at the second end of the power conversion system 340. Details are not described herein again.

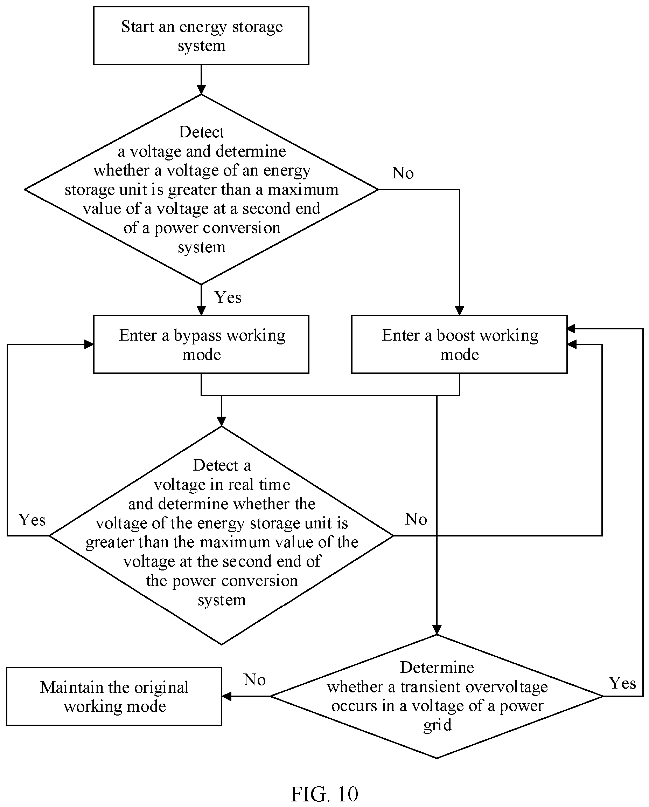

For ease of understanding of the foregoing implementation solution, the following describes an example with reference to FIG. 10. FIG. 10 shows an example of a working flowchart of the foregoing energy storage system. Specifically, after the energy storage system starts working, the voltage of the energy storage unit and the voltage at the second end of the power conversion system are detected, and whether the voltage of the energy storage unit is greater than the maximum value of the voltage at the second end of the power conversion system is determined. If the voltage of the energy storage unit is greater than the maximum value of the voltage at the second end of the power conversion system, the energy storage system enters a bypass working mode. For specific implementation, refer to the foregoing description when the voltage of the energy storage unit is greater than the voltage at the second end of the power conversion system. Details are not described herein again. If the voltage of the energy storage unit is not greater than the maximum value of the voltage at the second end of the power conversion system, the energy storage system enters a boost working mode. For specific implementation, refer to the foregoing description when the voltage of the energy storage unit is less than the voltage at the second end of the power conversion system. Details are not described herein again. After the energy storage system enters the bypass working mode or the boost working mode, the voltage of the energy storage unit and the voltage at the second end of the power conversion system are still detected in real time, and whether the voltage of the energy storage unit is greater than the maximum value of the voltage at the second end of the power conversion system is determined. Then, the corresponding working mode is entered based on a determining result. Details are not described herein. In addition, after the energy storage system enters the bypass working mode or the boost working mode, it is further determined, in real time based on the detected voltage at the second end of the power conversion system, whether a transient overvoltage occurs in the voltage at the second end of the power conversion system. If no transient overvoltage occurs, the original working mode is maintained. If a transient overvoltage occurs, the energy storage system enters the boost working mode. For specific implementation, refer to the foregoing description when the transient overvoltage occurs in the voltage at the second end of the power conversion system 340. Details are not described herein again.

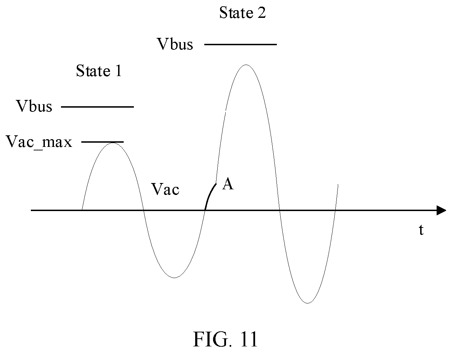

In a possible implementation, for an effect diagram of the boost working mode when a transient overvoltage occurs, refer to FIG. 11. In FIG. 11, a state 1 is a state before a transient overvoltage occurs. In this state, the voltage Vbus input to the power conversion system may be greater than the maximum value Vac_max of the voltage Vac at the second end of the power conversion system by using the bypass working mode or the boost working mode. A transient overvoltage begins to occur at a point A, and then the output voltage of the energy storage unit is rapidly boosted through the DC/DC conversion circuit, so that a boosted voltage is greater than a maximum voltage after the transient overvoltage occurs, which can be referred to a state 2. After a boosted Vbus is input to the power conversion system, the power conversion system can work normally.

In the foregoing implementation, when a transient overvoltage occurs in the voltage at the second end of the power conversion system, the controllable switching transistor is quickly turned off, so that the output voltage of the energy storage unit can be increased by using the DC/DC conversion circuit while the voltage at the second end of the power conversion system is prevented from backfeeding energy to the energy storage unit; and an increased voltage is output to the power conversion system, so that the power conversion system can work normally. In other words, in this implementation, the controllable switching transistor cooperates with the DC/DC conversion circuit, to implement high voltage ride through, that is, the energy storage system can still work normally and can output power in a case of a transient overvoltage, thereby meeting compliance that the power grid is not disconnected from the grid due to abnormal fluctuation.

In addition, if the controllable switching transistor 330 is a device that is formed by connecting the IGBT and the diode D in parallel shown in FIG. 4, when the voltage of the energy storage unit 310 is greater than the voltage at the second end of the power conversion system 340, the control unit 350 controls the IGBT to be turned on. In this case, in a discharging process of the energy storage unit 310, a current flows from the energy storage unit 310 to the power grid 200, and the diode D is also turned on. Because the diode D has a voltage drop, and the IGBT also has a voltage drop, the voltage drops of the diode D and the IGBT connected in parallel decrease, thereby reducing a loss and improving efficiency. Similarly, in a process of charging the energy storage unit 310, a current flows from the power grid 200 to the energy storage unit 310 through the IGBT, so that a normal charging function of the energy storage unit can be ensured, and working efficiency can be improved.

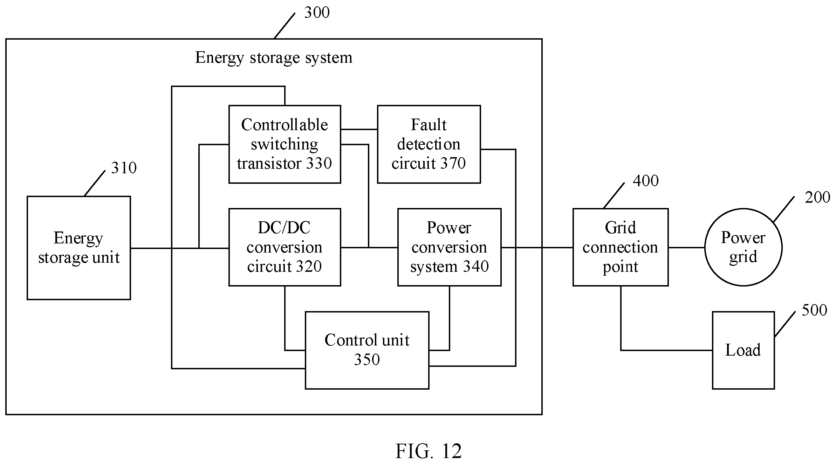

In a possible implementation, for example, as shown in FIG. 12, the energy storage system 300 may further include a fault detection circuit 370. The fault detection circuit 370 may be configured to detect a current of the controllable switching transistor 330 and determine whether the current exceeds a threshold. If the current exceeds the threshold, it indicates that a fault occurs in the energy storage unit 310 and causes a short circuit. When determining that the current of the controllable switching transistor 330 exceeds the threshold, the fault detection circuit 370 may send an indication signal for turning off the controllable switching transistor 330 to the control unit 350. Then, the control unit 350 sends, based on the indication, a control signal to the controllable switching transistor 330 to control the controllable switching transistor 330 to be turned off. In this way, when a short circuit fault occurs, a main loop can be quickly cut off, impact of the fault is reduced, and other risks caused by the fault are reduced.

In a possible implementation, if the controllable switching transistor 330 is an IGBT, the fault detection circuit 370 may be, for example, a desaturation detection circuit. The desaturation detection circuit may determine, by detecting a desaturation status of the IGBT, that a fault occurs in the energy storage unit 310 and causes a short circuit. For example, the desaturation detection circuit may detect a voltage (CE voltage for short) between a collector and an emitter of the IGBT. If the CE voltage is greater than a preset threshold, it indicates that a fault occurs in the energy storage unit 310 and causes a short circuit. In this case, the desaturation detection circuit may send an indication signal for turning off the IGBT to the control unit 350. The control unit 350 then sends, based on the indication, a control signal to the IGBT to control the IGBT to be turned off. In this way, when a short circuit fault occurs, a main loop can be quickly cut off, impact of the fault is reduced, and other risks caused by the fault are reduced.

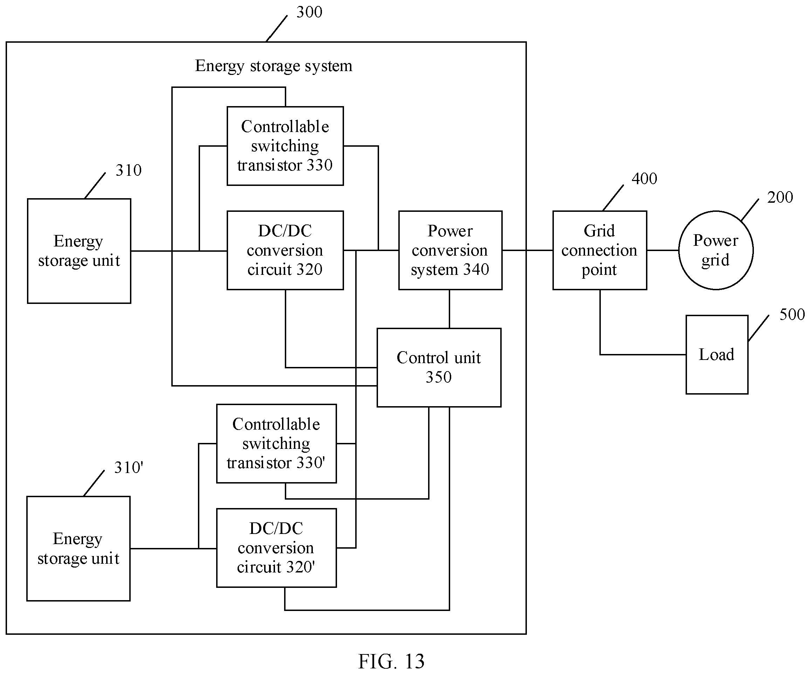

In another possible implementation, the energy storage system 300 may include a plurality of energy storage units 310, and may further include a plurality of DC/DC conversion circuits 320 and a plurality of controllable switching transistors 330. For example, as shown in FIG. 13, two energy storage units 310, two DC/DC conversion circuits 320, and two controllable switching transistors 330 are used for illustration. It can be seen that, in comparison with FIG. 3, in FIG. 13, an energy storage unit (represented as an energy storage unit 310' for ease of description), a DC/DC conversion circuit (represented as a DC/DC conversion circuit 320' for ease of description), and a controllable switching transistor (represented as a controllable switching transistor 330' for case of description) are added. The DC/DC conversion circuit 320' and the controllable switching transistor 330' are connected in parallel to form a parallel circuit, and the parallel circuit is configured to be connected between the energy storage unit 310' and the power conversion system 340'. The energy storage unit 310', the DC/DC conversion circuit 320', and the controllable switching transistor 330' are further connected to the control unit 350.

In this implementation, the control unit may separately detect voltages output by the plurality of energy storage units, and then compare the plurality of detected voltages with the voltage at the second end of the power conversion system. Corresponding working states of the controllable switching transistors and the DC/DC conversion circuit are respectively controlled based on comparison results. For ease of understanding, FIG. 13 is used as an example. The control unit 350 separately detects an output voltage (voltage A for short) of the energy storage unit 310 and an output voltage (voltage B for short) of the energy storage unit 310'. Then, the voltage A and the voltage B are separately compared with the voltage at the second end of the power conversion system 340. In addition, working states of the controllable switching transistor 330 and the DC/DC conversion circuit 320 are controlled based on a comparison result between the voltage A and the voltage at the second end of the power conversion system 340. For specific implementation, refer to the foregoing specific description. Details are not described herein again. In addition, working states of the controllable switching transistor 330' and the DC/DC conversion circuit 320' are controlled based on a comparison result between the voltage B and the voltage at the second end of the power conversion system 340. For specific implementation, refer to the foregoing specific description. Details are not described herein again.

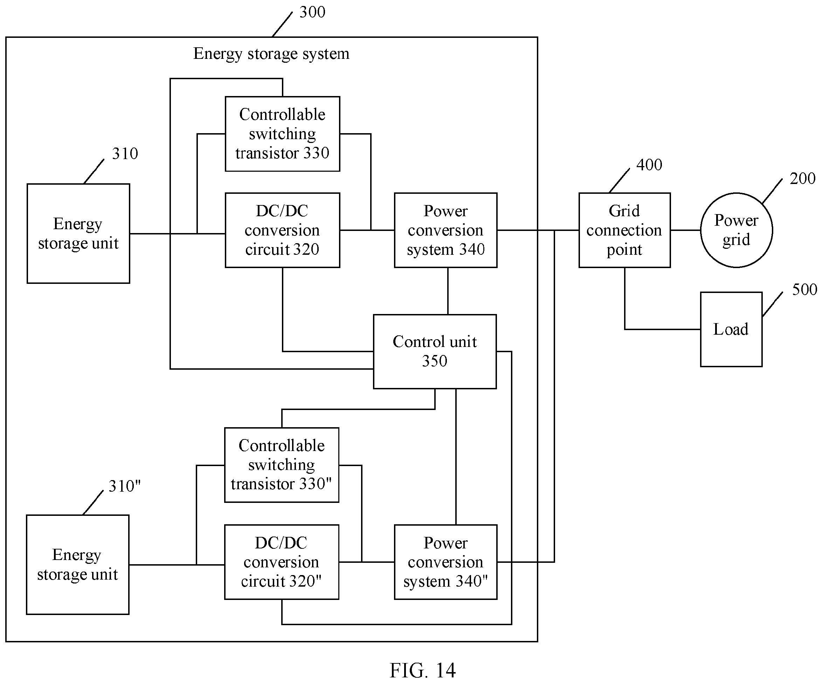

In another possible implementation, the energy storage system 300 may include a plurality of energy storage units 310, and may further include a plurality of DC/DC conversion circuits 320, a plurality of controllable switching transistors 330, and a plurality of power conversion systems 340. For example, as shown in FIG. 14, two energy storage units 310, two DC/DC conversion circuits 320, two controllable switching transistors 330, and two power conversion systems 340 are used for illustration. It can be seen that, in comparison with FIG. 3, an energy storage unit (represented as an energy storage unit 310" for ease of description), a DC/DC conversion circuit

(represented as a DC/DC conversion circuit 320" for ease of description), a controllable switching transistor (represented as a controllable switching transistor 330" for ease of description), and a power conversion system (represented as a power conversion system 340" for ease of description) are added in FIG. 14. The DC/DC conversion circuit 320" and the controllable switching transistor 330" are connected in parallel to form a parallel circuit, and the parallel circuit is configured to be connected between the energy storage unit 310" and the power conversion system 340". The energy storage unit 310", the DC/DC conversion circuit 320", the controllable switching transistor 330", and the power conversion system 340" are further connected to the control unit 350. The power conversion system 340" is also connected to the power grid 200 and the load 500 through the grid connection point 400. In another possible implementation, a control unit 350 may be further added to control the energy storage unit 310", the DC/DC conversion circuit 320", the controllable switching transistor 330", the power conversion system 340", and the like. The control unit 350 is specifically set based on an actual requirement. This is not limited in this embodiment of this application. The DC/DC conversion circuit 320", the controllable switching transistor 330", and the power conversion system 340" that are added in FIG. 14 are configured to implement energy conversion between the energy storage unit 310" and the power grid 200 based on control of the control unit 350. For details, refer to the foregoing description of the implementation process in FIG. 3. Details are not described herein again.

In this implementation, the controllable switching transistor cooperates with the DC/DC conversion circuit, to improve working efficiency of the power conversion system. This can implement energy conversion between the plurality of energy storage units and the power grid, thereby expanding an application scenario and having high practicability.

To better understand the working principle of the foregoing energy storage system, the following describes some possible circuit topologies of the energy storage system by using examples.

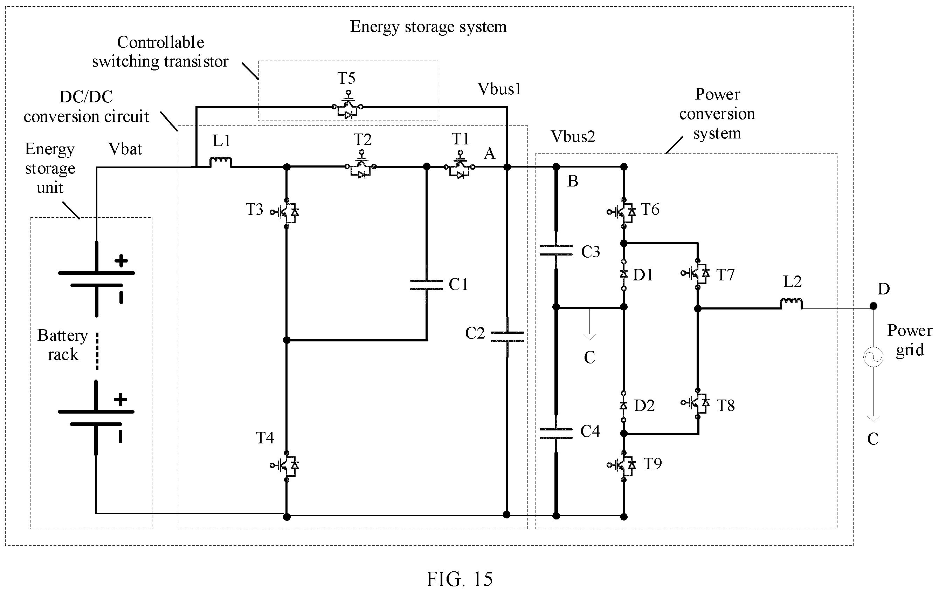

FIG. 15 is an example of a schematic of a possible circuit topology structure of an energy storage system. As shown in the figure, the energy storage unit may be a battery rack. A DC/DC conversion circuit may include an inductor L1, a switching module T1, a switching module T2, a switching module T3, a switching module T4, a capacitor C1, and a capacitor C2. The switching modules T1 to T4 may be, for example, triodes, field-effect transistors, IGBTs, or modules (IGBT switching modules for short) in which an IGBT and a diode are connected in parallel. This is not limited in this embodiment of this application. In FIG. 15, an example in which the switching modules T1 to T4 are the IGBT switching modules is shown. A controllable switching transistor includes a switching module T5, and the switching module T5 is shown by using an IGBT switching module as an example. A power conversion system includes a capacitor C3, a capacitor C4, a diode D1, a diode D2, a switching module T6, a switching module T7, a switching module T8, a switching module T9, and an inductor L2. The switching modules T6 to T9 may be, for example, triodes, field-effect transistors, IGBTs, or the foregoing IGBT switching modules. This is not limited in this embodiment of this application. In FIG. 15, an example in which the switching modules T6 to T9 are the IGBT switching modules is shown.

For example, each switching module shown in FIG. 15 above is an IGBT switching module. In the IGBT switching module, an emitter (E) of the IGBT is connected to an anode of the diode, and a collector (C) of the IGBT is connected to a cathode of the diode D. For the convenience of the following description, an end that connects the emitter (E) of the IGBT and the anode of the diode is referred to as a first connection end of the IGBT switching module, and an end that connects the collector (C) of the IGBT and the cathode of the diode D is referred to as a second connection end of the IGBT switching module. In this case, in FIG. 15, a positive electrode of the battery rack is connected to a first connection end of the IGBT switching module T5, and is further connected to one end of the inductor L1. The other end of the inductor L1 is connected to a first connection end of the IGBT switching module T2, and is further connected to a second connection end of the IGBT switching module T3. A second connection end of the IGBT switching module T2 is connected to a first connection end of the IGBT switching module T1. A second connection end of the IGBT switching module T1 is connected to a second connection end of the IGBT switching module T5.

Then, a first connection end of the IGBT switching module T3 is connected to a second connection end of the IGBT switching module T4, and is further connected to one end of the capacitor C1. That is, one end of the capacitor C1 is connected between the first connection end of the IGBT switching module T3 and the second connection end of the IGBT switching module T4. The other end of the capacitor C1 is connected to the second connection end of the IGBT switching module T2 and the first connection end of the IGBT switching module T1. A first connection end of the IGBT switching module T4 is connected to a negative electrode of the battery rack, and is further connected to one end of the capacitor C2. The other end of the capacitor C2, the second connection end of the IGBT switching module T1, and the second connection end of the IGBT switching module T5 are connected at a point A.

Then, the point A is connected to one end of the capacitor C3. The other end of the capacitor C3 is connected to one end of the capacitor C4, and is further connected to an anode of the diode D1 and a cathode of the diode D2. The other end of the capacitor C4 is connected to the negative electrode of the battery rack, and is further connected to a first connection end of the IGBT switching module T9. A second connection end of the IGBT switching module T9 is connected to an anode of the diode D2, and is further connected to a first connection end of the IGBT switching module T8. The cathode of the diode D2 is connected to the anode of the diode D1. A second connection end of the IGBT switching module T8 is connected to a first connection end of the IGBT switching module T7. A second connection end of the IGBT switching module T7 is connected to a cathode of the diode D1. The second connection end of the IGBT switching module T7 and the cathode of the diode D1 are further connected to a first connection end of the IGBT switching module T6. A second connection end of the IGBT switching module T6 and one end of the capacitor C3 are connected at a point B. A conducting wire between the point A and the point B is used to connect the DC/DC conversion circuit and the power conversion system. The conducting wire is also a conducting wire connecting the controllable switching transistor and the power conversion system. The conducting wire may be, for example, an electric wire or a cable.

Then, the second connection end of the IGBT switching module T8 and the first connection end of the IGBT switching module T7 are further connected to one end of the inductor L2. The other end of the inductor L2 is connected to a power grid. In addition, the power grid is connected to a point C. As shown in the figure, the point C is located at a position at which the other end of the capacitor C3 is connected to the anode of the diode D1. That is, the power grid may also be connected to the position to form a loop.

FIG. 15 shows only circuit structures of the energy storage unit, the DC/DC conversion circuit, the controllable switching transistor, and the power conversion system in the energy storage system as an example, and does not show specific circuit structures of the control unit, the voltage detection circuit, and the fault detection circuit 370. It may be understood that a circuit structure that is not drawn may be any circuit structure that can implement the foregoing described functions. This is not limited in this embodiment of this application. Although a specific circuit structure of the foregoing control unit is not drawn, the switching modules (T1 to T9) shown in FIG. 15 are controlled by the control unit. Details are not described again. In addition, an example in which the power conversion system is connected to the power grid is used in FIG. 15. It may be understood that there is a grid connection point (not shown in FIG. 15) between the power conversion system and the power grid. In specific implementation, the power conversion system may also be connected to a load, and details are not described again.

Based on the foregoing description, when a voltage of the energy storage unit is greater than a voltage peak at a second end of the power conversion system in a first time period, the control unit controls the controllable switching transistor to be turned on in a second time period, the DC/DC conversion circuit to stop working, and the power conversion system is configured to charge or discharge the energy storage unit by using the controllable switching transistor. For example, as shown in FIG. 15, a voltage at the point A is represented as Vbus1, a voltage at the point B is represented as Vbus2, and a voltage of a battery is still represented by Vbat. For example, if the energy storage system shown in FIG. 15 is the foregoing energy storage system 300, in this case, the point A is the second end of the foregoing controllable switching transistor, and the point A is also the second end of the foregoing DC/DC conversion circuit. The point B is a first end of the power conversion system. One end that is of the power conversion system and that is configured to connect to the power grid is the second end of the power conversion system. For example, a point D in FIG. 15 is the second end of the power conversion system.

In this case, in a possible implementation, when the voltage of the energy storage unit is greater than the voltage at the second end of the power conversion system, and when Vbat>Vbus1>Vbus2, the power conversion system is configured to discharge the energy storage unit. It may be understood that a value of the voltage Vbus1 at the point A and a value of the voltage Vbus2 at the point B may be controlled by a control module (not shown in the figure) in the energy storage system. Specific control is a common technical means in this field, and is not limited in this embodiment of this application.

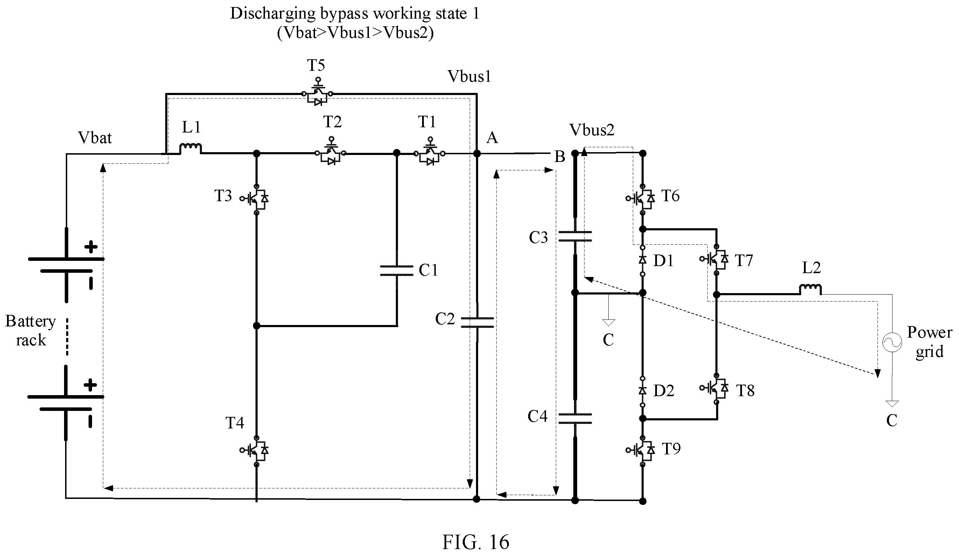

For example, when the controllable switching transistor is turned on in the second time period, the power conversion system is controlled to perform inversion conversion on a voltage at the first end of the power conversion system, so that an output voltage of the energy storage unit is greater than a voltage at a second end of the controllable switching transistor, to discharge the energy storage unit by using the controllable switching transistor. With reference to FIG. 16 to FIG. 19, the following describes specific implementation in the discharging working state by using an example.

Circuit structures in FIG. 16 to FIG. 19 are the same as those in FIG. 15. A difference lies in that a current flow direction is added to facilitate description of specific implementation in a discharging working state. In addition, in order not to interfere with rapid identification of the current flow direction, the specific energy storage unit, DC/DC conversion circuit, controllable switching transistor, and power conversion system are not marked.

For example, refer to FIG. 16. In FIG. 16, because the output voltage of the energy storage unit, that is, the battery rack, is greater than the voltage at the second end of the power conversion system, the controllable switching transistor, that is, the IGBT switching module T5, is turned on, and the switching modules (T1 to T4) in the DC/DC conversion circuit are turned off. Then, because the voltage Vbat of the battery rack is greater than Vbus1, a current flows from the positive electrode of the battery rack to the point A, and flows to the capacitor C2 through the point A to charge the capacitor C2. The capacitor C2 is further connected to the negative electrode of the battery rack to form a current loop, as shown in FIG. 16. In addition, after a current flows from the positive electrode of the battery rack to the point A, the current further flows through the point B (because there is a voltage drop in the conducting wire between the point A and the point B, Vbus1>Vbus2) to charge the capacitor C3 and the capacitor C4. Similarly, the capacitor C4 is connected to the negative electrode of the battery rack to form a current loop. In a process in which the battery rack charges the capacitor C2, because Vbus1>Vbus2, the capacitor C2 further charges the capacitor C3 and the capacitor C4. A current flows from the capacitor C2 to the capacitor C3 and the capacitor C4, and then flows back to the capacitor C2, to form a current loop, as shown in FIG. 16. In addition, in a charging process, the capacitor C3 further performs discharging to supply power to the power grid. Specifically, as shown in FIG. 16, in a discharging process, the switching module T6 and the switching module T7 are turned on, and a discharging current of the capacitor C3 reaches the power grid through the point B, the switching module T6, the switching module T7, and the inductor L2. The power grid is connected to the point C to form a current loop with the power conversion system.

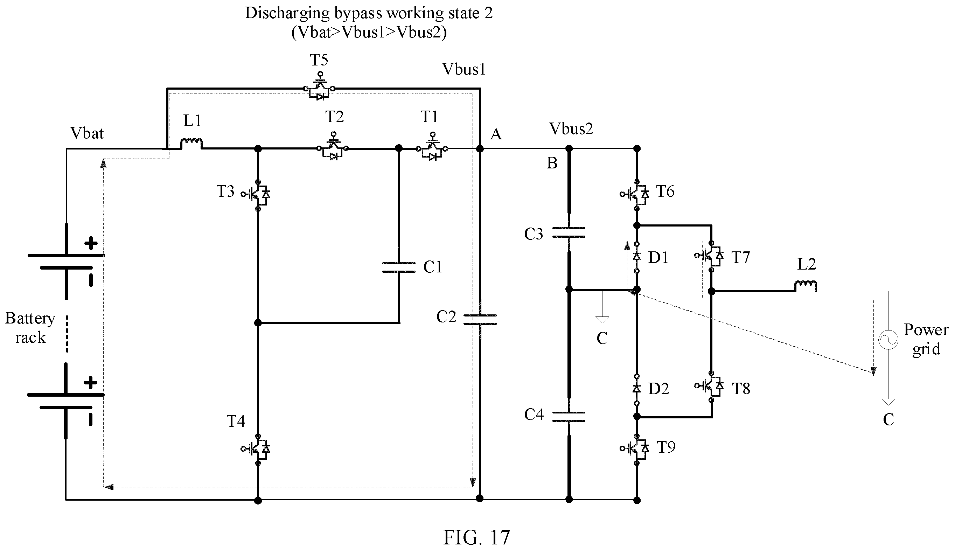

The power conversion system is configured to convert a direct current into an alternating current to supply power to the power grid. The alternating current includes a forward current and a reverse current. A working state (a discharging bypass working state 1) shown in FIG. 16 is a state in which the power conversion system converts a direct current into a forward alternating current. In addition, a voltage of the alternating current changes at each moment, for example, as shown in the alternating current sine waveform diagram shown in FIG. 2. To avoid such a sudden voltage change, in a process in which the power conversion system converts the direct current into the alternating current, freewheeling needs to be performed, so that the voltage and the current change smoothly. The freewheeling is generally implemented through cooperation between a freewheeling diode and an inductor. For example, refer to FIG. 17. A working state (a discharging bypass working state 2) shown in FIG. 17 is a freewheeling state in a process in which the power conversion system converts a direct current into a forward alternating current. The freewheeling is implemented through cooperation between the diode D1 and the inductor L2. Specifically, in this state, the switching module T7 is turned on. When a current of the inductor L2 suddenly changes, the current may flow to the diode D1 through the power grid, and then flow back to the inductor L2 through the switching module T7, to form a current loop to consume the sudden change.

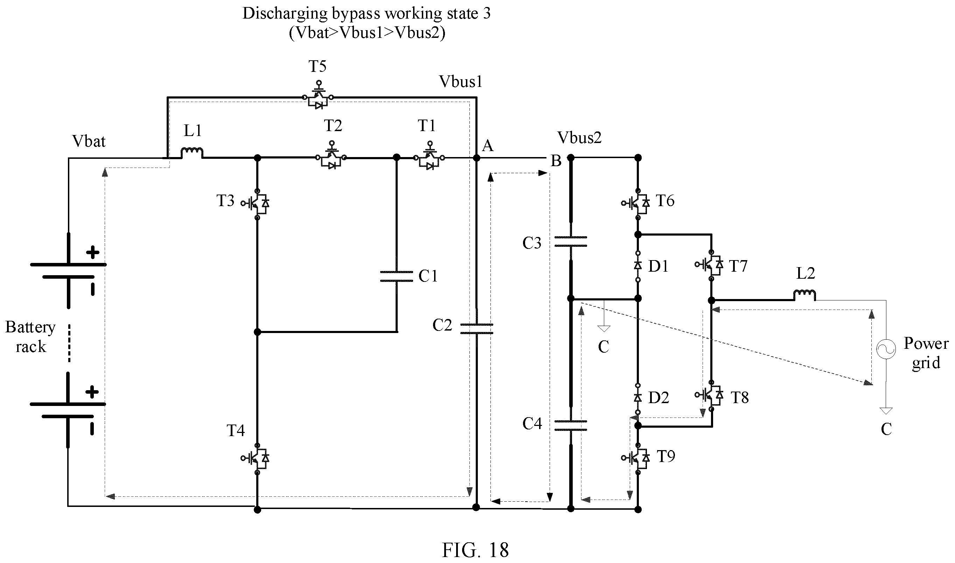

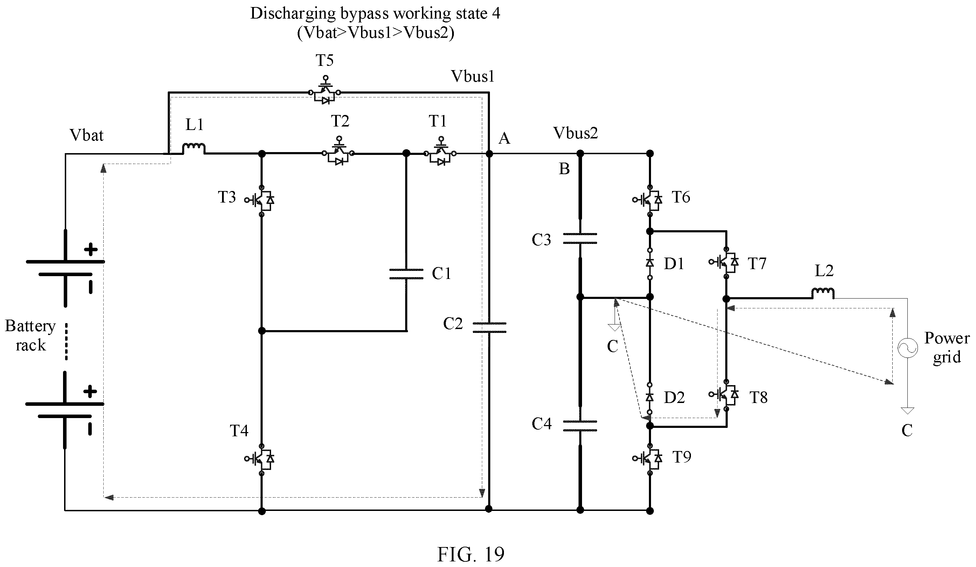

Refer to FIG. 18. A working state (a discharging bypass working state 3) shown in FIG. 18 is a state in which the power conversion system converts a direct current into a reverse alternating current. This state supplies power to the power grid by turning on the switching module T8 and the switching module T9 and by discharging the capacitor C4. Specifically, a discharging current of the capacitor C4 reaches the power grid through the point C, and then flows back to the capacitor C4 through the inductor L2, the switching module T8, and the switching module T9 to form a loop. In this way, reverse alternating current power supply to the power grid is implemented. It may be understood that, in the state shown in FIG. 18, the battery rack is still charging the capacitor C2, the capacitor C3, and the capacitor C4, and the capacitor C2 is also charging the capacitor C3 and the capacitor C4. For details, refer to related descriptions in FIG. 16. Details are not described herein again. In addition, similar to the foregoing forward alternating current power supply, the reverse alternating current power supply process also needs to be freewheeled. For example, refer to FIG. 19.

A working state (a discharging bypass working state 4) shown in FIG. 19 is a freewheeling state in a process in which the power conversion system converts a direct current into a reverse alternating current. The freewheeling is implemented through cooperation between the diode D2 and the inductor L2. Specifically, in this state, the switching module T8 is turned on. When the current of the inductor L2 suddenly changes, the current may flow to the diode D2 through the switching module T8, and then flow back to the power grid through the point C, to form a current loop to consume the sudden change.

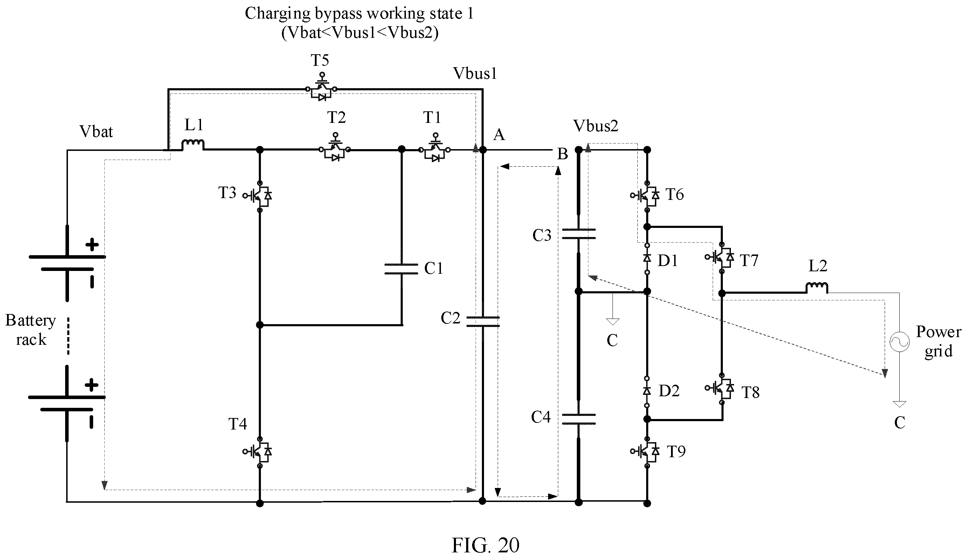

In another possible implementation, when the voltage of the energy storage unit is greater than the voltage at the second end of the power conversion system, and when Vbat<Vbus1<Vbus2, the power conversion system is configured to charge the energy storage unit. For example, when the controllable switching transistor is turned on in the second time period, the power conversion system is controlled to perform rectification conversion on the voltage at the second end of the power conversion system, so that the voltage at the second end of the controllable switching transistor is greater than the output voltage of the energy storage unit, to charge the energy storage unit by using the controllable switching transistor. With reference to FIG. 20 to FIG. 23, the following describes specific implementation in the charging working state by using an example.

For example, refer to FIG. 20. A working state (a charging bypass working state 1) shown in FIG. 20 is a state in which the power conversion system converts a forward alternating current into a direct current. In FIG. 20, because the voltage of the energy storage unit, that is, the battery rack, is greater than the voltage at the second end of the power conversion system, the controllable switching transistor, that is, the IGBT switching module T5, is turned on, and the switching modules (T1 to T4) in the DC/DC conversion circuit are turned off. However, although the voltage of the battery rack is greater than the voltage at the second end of the power conversion system, the power grid may charge the battery rack because the voltage of the battery rack is less than a preset threshold, or energy in the power grid is excessive, or electric energy in the power grid is recycled according to a plan, or the like. Specifically, as shown in FIG. 20, the switching module T6 and the switching module T7 are first turned on. A current of the power grid charges the capacitor C3 through the point C, and then flows back to the power grid through the point B, the switching module T6, the switching module T7, and the inductor L2 to form a charging loop. In a process in which the power grid charges the capacitor C3, the capacitor C3 performs discharging to charge the capacitor C2. The discharging current of the capacitor C3 flows from the point B to the point A and flows to the capacitor C2, and then flows back to the capacitor C3 through the capacitor C4 to form a current loop, as shown in FIG. 20. The capacitor C3 charges the capacitor C2, so that the voltage at the point A increases. In this case, Vbat<Vbus1<Vbus2. Then, the capacitor C2 starts to perform discharging to charge the battery rack. Specifically, a charging current flows to the battery rack through the switching module T5 to charge the battery. Then, the current flows to the capacitor C2 through the negative electrode of the battery rack, to form a charging loop.

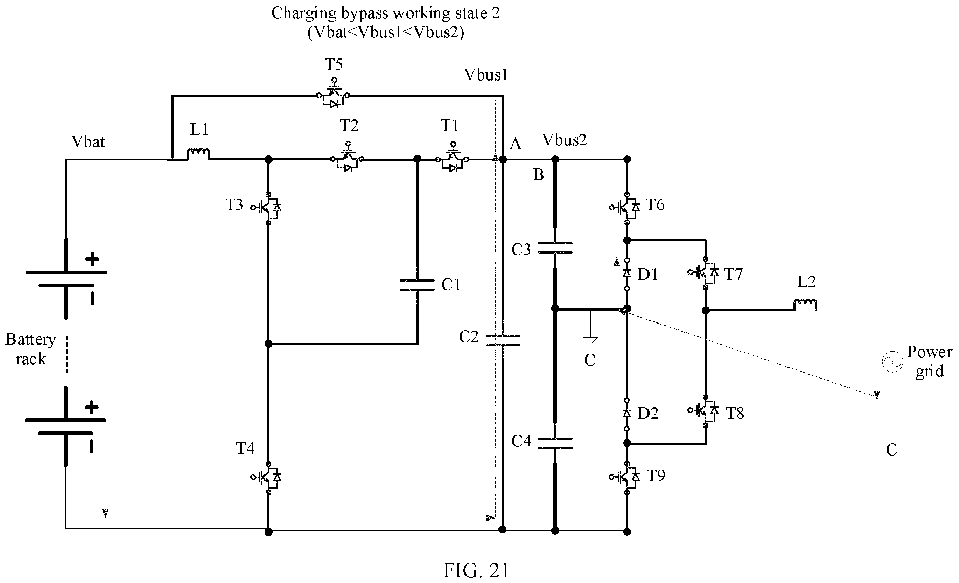

In addition, because a current used by the power grid to charge the capacitor is an alternating current, freewheeling is also required in a process of charging the capacitor. For example, refer to FIG. 21. A working state (a charging bypass working state 2) shown in FIG. 21 is a freewheeling state in a process in which the power conversion system converts a forward alternating current into a direct current. For specific implementation of the freewheeling, refer to the description in FIG. 17. Details are not described herein again.

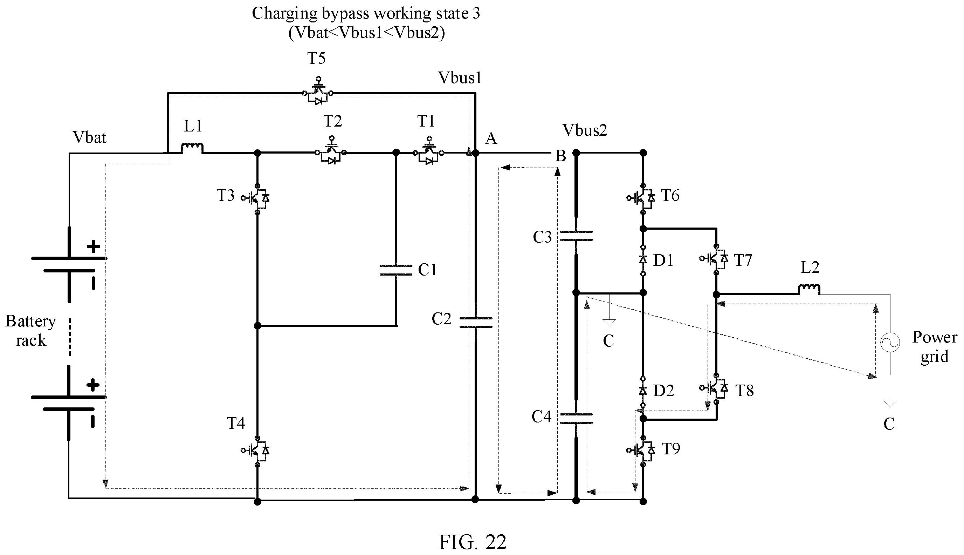

Refer to FIG. 22. A working state (a charging bypass working state 3) shown in FIG. 22 is a state in which the power conversion system converts a reverse alternating current into a direct current. This state is implemented by turning on the switching module T8 and the switching module T9 and by charging the capacitor C4. Specifically, the current of the power grid flows to the capacitor C4 through the inductor L2, the switching module T8, and the switching module T9 to charge the capacitor C4, and then flows back to the power grid through the point C, to form a charging loop. In a process in which the power grid charges the capacitor C4, the capacitor C4 further performs discharging to charge the capacitor C2. The discharging current of the capacitor C4 flows through the capacitor C3, then flows to the capacitor C2, and then flows back to the capacitor C4, to form a current loop, as shown in FIG. 22. The capacitor C4 charges the capacitor C2, so that the voltage at the point A increases. In this case, Vbat<Vbus1<Vbus2. Then, the capacitor C2 starts to perform discharging to charge the battery rack. Specifically, the discharging current flows to the battery rack through the switching module T5 to charge the battery. Then, the current flows to the capacitor C2 through the negative electrode of the battery rack, to form the charging loop.

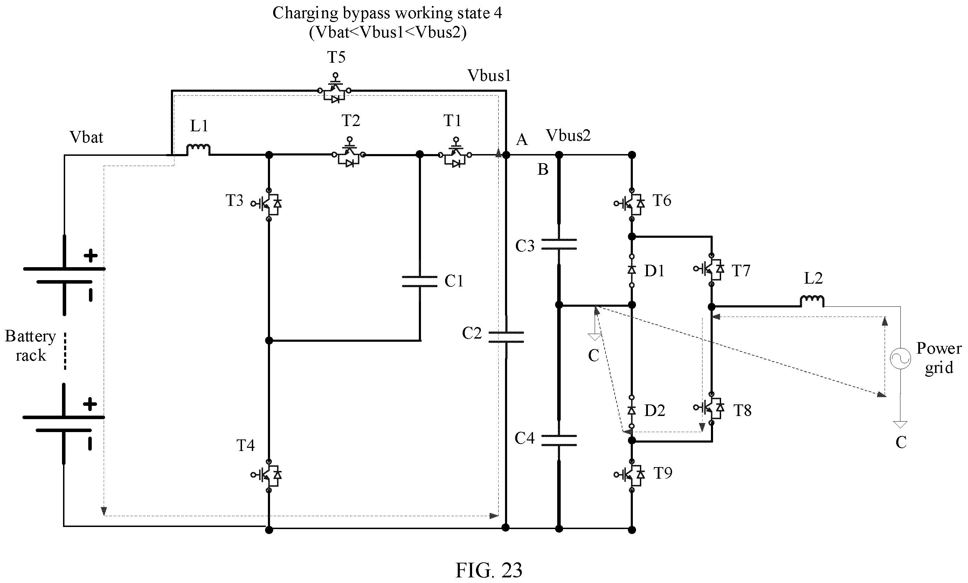

In addition, because a current used by the power grid to charge the capacitor is an alternating current, freewheeling is also required in a process of charging the capacitor. For example, refer to FIG. 23. A working state (a charging bypass working state 4) shown in FIG. 23 is a freewheeling state in a process in which the power conversion system converts a reverse alternating current into a direct current. For specific implementation of the freewheeling, refer to the description in FIG. 19. Details are not described herein again.

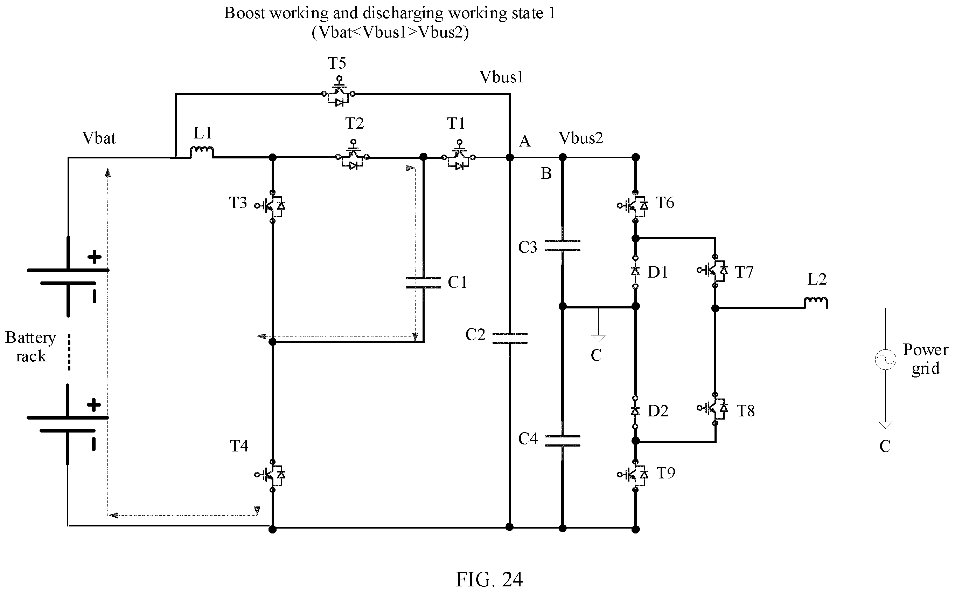

In another possible implementation, when the voltage of the energy storage unit is less than the voltage at the second end of the power conversion system, the control unit is configured to control the controllable switching transistor to be turned off, the DC/DC conversion circuit is configured to increase the output voltage of the energy storage unit and output an increased voltage to the power conversion system, and the power conversion system is configured to charge or discharge the energy storage unit based on the increased voltage. For example, when the voltage of the energy storage unit is less than the voltage at the second end of the power conversion system, and when Vbat<Vbus1>Vbus2, the power conversion system is configured to discharge the energy storage unit. For example, when the controllable switching transistor is turned off in the third time period, the DC/DC conversion circuit is controlled to perform boost conversion on the output voltage of the energy storage unit, and output an increased voltage to the power conversion system, to discharge the energy storage unit. With reference to FIG. 24 to FIG. 27, the following describes specific implementation in the discharging working state by an example.

In FIG. 24 to FIG. 27, because the voltage of the energy storage unit, that is, the battery rack, is less than the voltage at the second end of the power conversion system, the controllable switching transistor, that is, the IGBT switching module T5, is turned off, and the DC/DC conversion circuit starts working. Specifically, the DC/DC conversion circuit is configured to boost the voltage of the battery rack, and after the voltage is boosted, Vbus 1> Vbus2 is enabled, to supply power to the power grid. The entire voltage boosting process may include four working states, which may be respectively referred to FIG. 24 to FIG. 27.

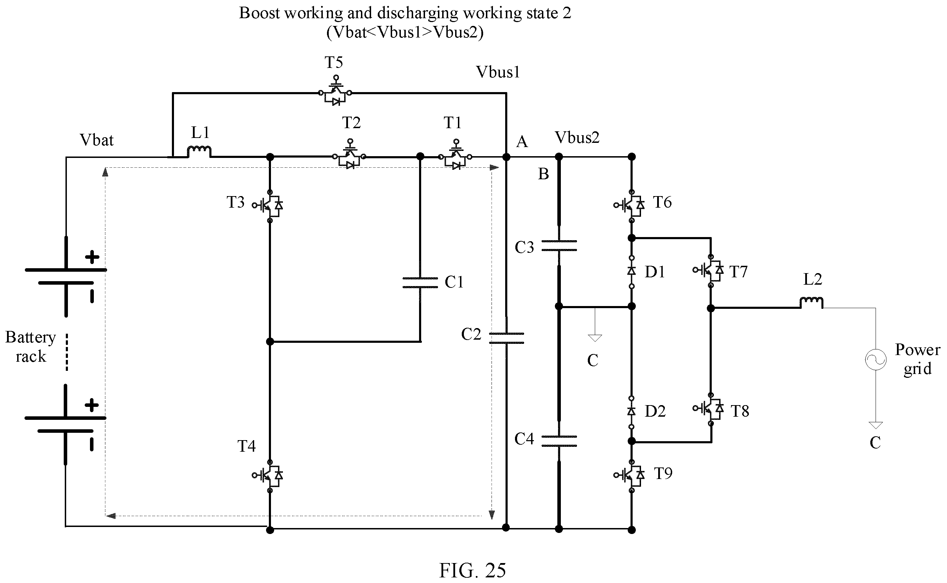

In the state (a boost working and discharging working state 1) shown in FIG. 24, the switching modules T2 and T4 in the DC/DC conversion circuit are turned on, and the switching modules T1 and T3 are turned off, so that the battery rack can store energy for the inductor L1 and charge the capacitor C1. A specific current loop is shown in FIG. 24. Then, the switching modules T2 and T1 in the DC/DC conversion circuit are turned on, and the switching modules T3 and T4 are turned off, so that the battery rack can charge the capacitor C2. A charging loop is shown in FIG. 25. A state shown in FIG. 25 is referred to as a boost working and discharging working state 2 for short. In this state, the voltage at the point A is the voltage of the battery rack plus a voltage of the inductor L1, and is greater than the voltage of the battery rack, thereby implementing voltage boosting. In addition, in this case, the voltage Vbus1 at the point A is greater than the voltage Vbus2 at the point B, so that the capacitor C2 performs discharging to supply power to the power grid. For a process in which the capacitor C2 performs discharging to supply power to the power grid, refer to related descriptions in FIG. 16 to FIG. 19. Details are not described herein again.

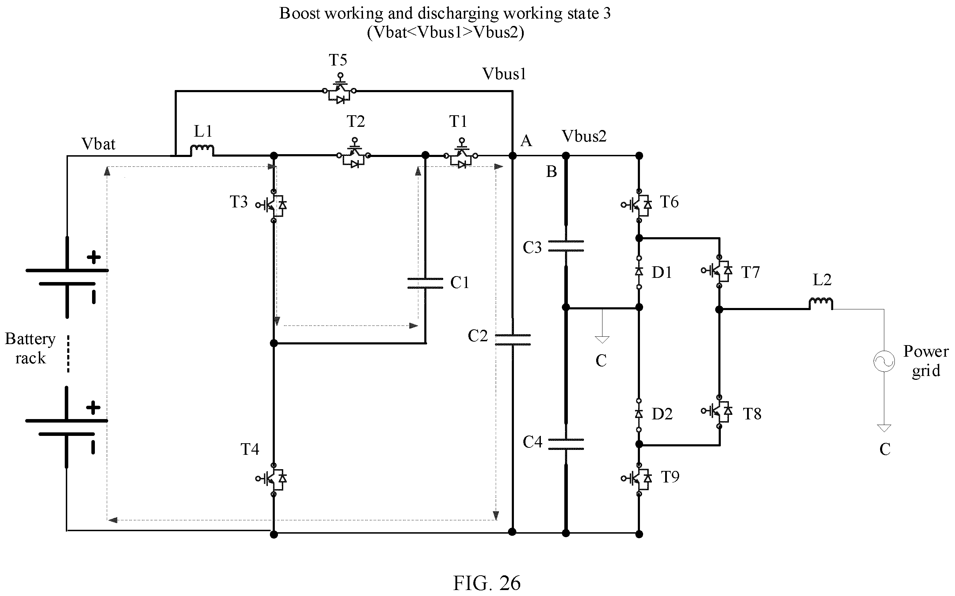

After completing the foregoing boost working and discharging working state 2, the DC/DC conversion circuit enters a state (a boost working and discharging working state 3) shown in FIG. 26. Specifically, in the DC/DC conversion circuit, the switching modules T3 and T1 are turned on, and the switching modules T2 and T4 are turned off, so that the battery rack can store energy for the inductor L1 and charge the capacitor C1 and the capacitor C2. A specific current loop is shown in FIG. 26. Similarly, in this state, the voltage at the point A is the voltage of the battery rack plus voltages of the inductor L1 and the capacitor C1, and is greater than the voltage of the battery rack, thereby implementing voltage boosting. In addition, in this case, the voltage Vbus1 at the point A is greater than the voltage Vbus2 at the point B, so that the capacitor C2 performs discharging to supply power to the power grid. For a process in which the capacitor C2 performs discharging to supply power to the power grid, refer to related descriptions in FIG. 16 to FIG. 19. Details are not described herein again. A boosted voltage is greater than a maximum voltage of the alternating current of the power grid, so that the power conversion system can work normally in an entire alternating current cycle, thereby improving working efficiency.

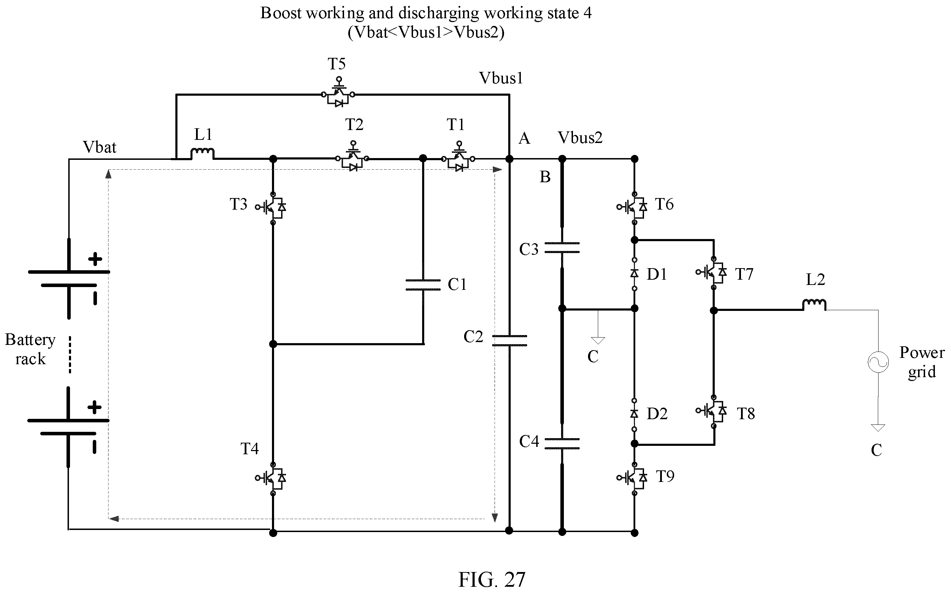

After completing the foregoing boost working and discharging working state 3, the DC/DC conversion circuit enters a state (a boost working and discharging working state 4) shown in FIG. 27. The boost working and discharging working state 4 is the same as the boost working discharging working state 2 shown in FIG. 25. For details, refer to the foregoing description. Details are not described herein again. Then, the DC/DC conversion circuit cyclically works based on the four working states: the boost working and discharging working states 1 to 4, to boost the battery rack. Details are not described herein again.

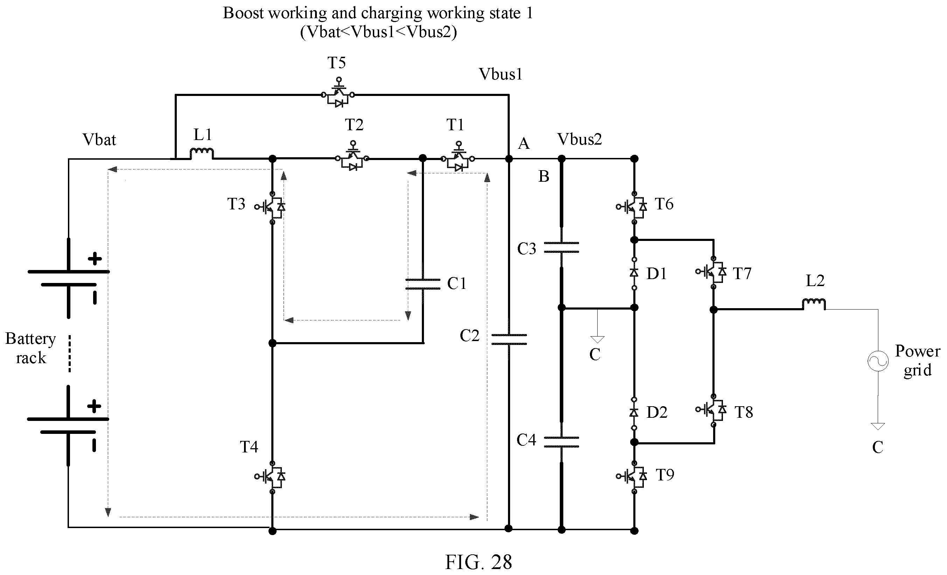

In a possible implementation, when the voltage of the energy storage unit is less than the voltage at the second end of the power conversion system, and when Vbat<Vbus1<Vbus2, the power conversion system is configured to charge the energy storage unit. For example, when the controllable switching transistor is turned off in the third time period, the DC/DC conversion circuit is controlled to perform buck conversion on the voltage at the first end of the power conversion system, and output a reduced voltage to the energy storage unit, to charge the energy storage unit. With reference to FIG. 28 to FIG. 31, the following describes specific implementation in the charging working state by using an example.

In FIG. 28 to FIG. 31, because the voltage of the energy storage unit, that is, the battery rack, is less than the voltage at the second end of the power conversion system, the controllable switching transistor, that is, the IGBT switching module T5, is turned off, and the DC/DC conversion circuit starts working. Specifically, the DC/DC conversion circuit is configured to boost the voltage of the battery rack, and after the voltage is boosted and Vbus1<Vbus2 is controlled, the power grid charges the battery rack. The entire voltage boosting process may include four working states, which may be respectively referred to FIG. 28 to FIG. 31.

In the state (a boost working and charging working state 1) shown in FIG. 28, the power grid charges the battery C2 by using the power conversion system. For specific implementation, refer to related descriptions in FIG. 20 to FIG. 23. Details are not described herein again. In addition, in a process of charging the battery C2, the battery C2 further performs discharging to charge the battery rack. Specifically, in the DC/DC conversion circuit, the switching modules T3 and T1 are turned on, and the switching modules T2 and T4 are turned off. Therefore, a discharging current of the capacitor C2 flows to the battery rack through the switching module T1, the capacitor C1, the switching module T3, and the inductor L1. Then, the discharging current flows back to the capacitor C2 through the negative electrode of the battery rack to form a loop, as shown in FIG. 28. In this state, the voltage at the point A is the voltage of the battery rack plus the voltages of the inductor L1 and the capacitor C1, and is greater than the voltage of the battery rack, thereby implementing voltage boosting. A boosted voltage is greater than a maximum voltage of the alternating current of the power grid, so that the power conversion system can work normally in an entire alternating current cycle, thereby improving working efficiency.

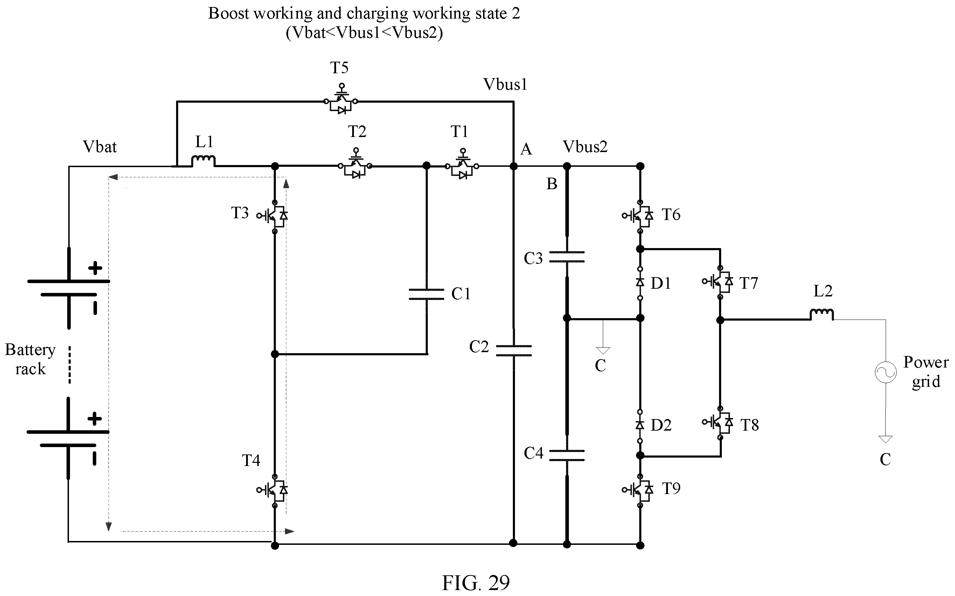

After completing the foregoing boost working and charging working state 1, the DC/DC conversion circuit enters a state (a boost working and charging working state 2) shown in FIG. 29. This state is a freewheeling state. Specifically, in the DC/DC conversion circuit, the switching modules T3 and T4 are turned on, and the other switching modules are turned off. Then, a current in the inductor L1 flows back to the inductor L1 through the battery rack, the switching module T4, and the switching module T3, to form a current loop. In this way, a voltage with a sudden change in the inductor L1 is consumed, so that a device loss is not caused by a sudden change of a voltage and a current.

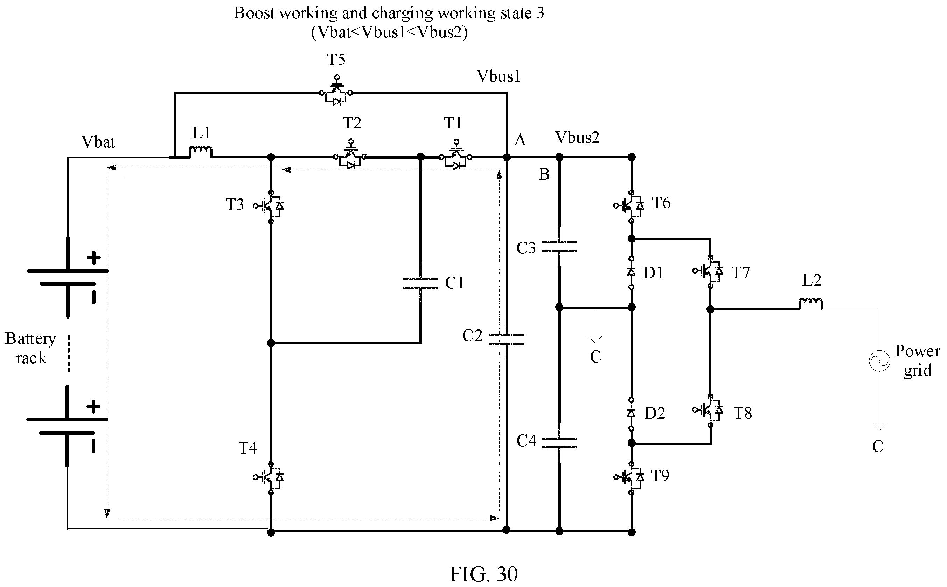

After completing the foregoing boost working and charging working state 2, the DC/DC conversion circuit enters a state (a boost working and charging working state 3) shown in FIG. 30. The power grid charges the battery C2 by using the power conversion system. For specific implementation, refer to related descriptions in FIG. 20 to FIG. 23. Details are not described herein again. In addition, in a process of charging the battery C2, the battery C2 further performs discharging to charge the battery rack. Specifically, in the DC/DC conversion circuit, the switching modules T2 and T1 are turned on, and the switching modules T3 and T4 are turned off. Therefore, the discharging current of the capacitor C2 flows to the battery rack through the switching module T1, the switching module T2, and the inductor L1. Then, the discharging current flows back to the capacitor C2 through the negative electrode of the battery rack to form a loop, as shown in FIG. 30. In this state, the voltage at the point A is the voltage of the battery rack plus the voltage of the inductor L1, and is greater than the voltage of the battery rack, thereby implementing voltage boosting. A boosted voltage is greater than a maximum voltage of the alternating current of the power grid, so that the power conversion system can work normally in an entire alternating current cycle, thereby improving working efficiency.

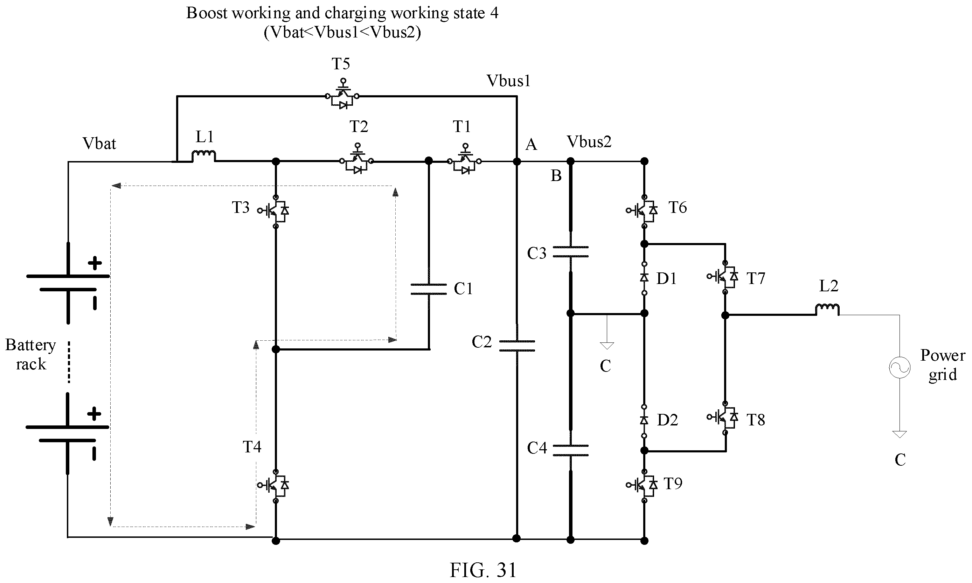

After completing the foregoing boost working and charging working state 3, the DC/DC conversion circuit enters a state (a boost working and charging working state 4) shown in FIG. 31. This state is a freewheeling state. Specifically, in the DC/DC conversion circuit, the switching modules T2 and T4 are turned on, and the other switching modules are turned off. Then, a current in the inductor L1 flows back to the inductor L1 through the battery rack, the switching module T4, the capacitor C1, and the switching module T2, to form a current loop. In this way, a voltage with a sudden change in the inductor L1 is consumed, so that a device loss is not caused by a sudden change of a voltage and a current. Then, the DC/DC conversion circuit cyclically works based on the four working states of the boost working and charging working states 1 to 4, to boost the battery rack. Details are not described herein again.

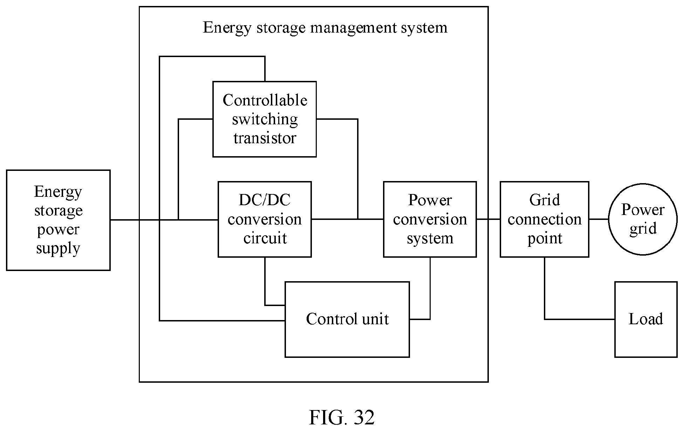

This application further provides an energy storage management system. For example, refer to FIG. 32. The energy storage management system includes a DC/DC conversion circuit, a controllable switching transistor, a power conversion system, and a control unit.

A first end of the controllable switching transistor is configured to connect to an energy storage power supply, a second end of the controllable switching transistor is connected to a first end of the power conversion system, a first end of the DC/DC conversion circuit is connected to the energy storage power supply, a second end of the DC/DC conversion circuit is connected to the first end of the power conversion system, a second end of the power conversion system is configured to connect to a grid connection point, and the power conversion system is configured to connect to a power grid or a load through the grid connection point.

The control unit is configured to: when an output voltage of the energy storage power supply is continuously greater than a voltage peak at the second end of the power conversion system in a first time period, control, in a second time period, the controllable switching transistor to be turned on, so that the DC/DC conversion circuit stops working, to charge or discharge the energy storage power supply by using the power conversion system.

The control unit is configured to: when the output voltage of the energy storage power supply is less than the voltage peak at the second end of the power conversion system in a third time period, control the controllable switching transistor to be turned off, to charge or discharge the energy storage power supply by using the power conversion system and the DC/DC conversion circuit. A time sequence is from the first time period to the second time period and then to the third time period.

In a possible implementation, the control unit is further configured to: when the controllable switching transistor is turned on in the second time period, control the power conversion system to perform rectification conversion on the voltage at the second end of the power conversion system, so that the voltage at the second end of the controllable switching transistor is greater than the output voltage of the energy storage power supply, to charge the energy storage unit by using the controllable switching transistor.

For specific implementation and a working principle of the energy storage management system, refer to related descriptions of the energy storage system in FIG. 3 and the possible implementations in FIG. 3. Details are not described herein again.

In this application, terms such as "first" and "second" are used to distinguish between same items or similar items that have basically same functions. It should be understood that "first", "second", and "n^{th}" do not have a logical or time sequential dependency relationship, and a quantity and an execution sequence are not limited. It should also be understood that although the following descriptions use terms such as "first" and "second" to describe various elements, these elements should not be limited by the terms. These terms are simply used to distinguish one element from another.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

It should be further understood that the term "include" (also referred to as "includes", "including", "comprises", and/or "comprising") used in this specification specifies presence of the stated features, integers, steps, operations, elements, and/or components, but does not preclude presence or addition of one or more other features, integers, steps, operations, elements, components, and/or groups thereof.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily mean a same embodiment. In addition, these particular features, structures, or characteristics may be combined in one or more embodiments in any appropriate manner.

Finally, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An energy storage system, wherein the energy storage system comprises an energy storage unit, a DC/DC conversion circuit, a controllable switching transistor, a power conversion system, and a control unit;
a first end of the controllable switching transistor is connected to the energy storage unit, a second end of the controllable switching transistor is connected to a first end of the power conversion system, a first end of the DC/DC conversion circuit is connected to the energy storage unit, a second end of the DC/DC conversion circuit is connected to the first end of the power conversion system, a second end of the power conversion system is configured to connect to a grid connection point, and the power conversion system is configured to connect to a power grid or a load through the grid connection point;
the control unit is configured to: when an output voltage of the energy storage unit is continuously greater than a voltage peak at the second end of the power conversion system in a first time period, control, in a second time period, the controllable switching transistor to be turned on, so that the DC/DC conversion circuit stops working, to charge or discharge the energy storage unit by using the power conversion system; and
the control unit is configured to: when the output voltage of the energy storage unit is less than the voltage peak at the second end of the power conversion system in a third time period, control the controllable switching transistor to be turned off, to charge or discharge the energy storage unit by using the power conversion system and the DC/DC conversion circuit, wherein the time sequence is from the first time period to the second time period and then to the third time period.

2. The energy storage system according to claim 1, wherein the control unit is further configured to: when the controllable switching transistor is turned on in the second time period, control the power conversion system to perform rectification conversion on a voltage at the second end of the power conversion system, so that a voltage at the second end of the controllable switching transistor is greater than the output voltage of the energy storage unit, to charge the energy storage unit by using the controllable switching transistor.

3. The energy storage system according to claim 2, wherein when the output voltage of the energy storage unit is less than the voltage at the second end of the controllable switching transistor and the voltage at the second end of the controllable switching transistor is less than a voltage at the first end of the power conversion system, the power conversion system is configured to charge the energy storage unit.

4. The energy storage system according to any one of claims 1 to 3, wherein the control unit is further configured to: when the controllable switching transistor is turned on in the second time period, control the power conversion system to perform inversion conversion on the voltage at the first end of the power conversion system, so that the output voltage of the energy storage unit is greater than the voltage at the second end of the controllable switching transistor, to discharge the energy storage unit by using the controllable switching transistor.

5. The energy storage system according to claim 4, wherein when the output voltage of the energy storage unit is greater than the voltage at the second end of the controllable switching transistor and the voltage at the second end of the controllable switching transistor is greater than the voltage at the first end of the power conversion system, the power conversion system is configured to discharge the energy storage unit.

6. The energy storage system according to any one of claims 1 to 5, wherein the control unit is further configured to: when the controllable switching transistor is turned off in the third time period, control the DC/DC conversion circuit to perform buck conversion on the voltage at the first end of the power conversion system and output a reduced voltage to the energy storage unit, to charge the energy storage unit.

7. The energy storage system according to claim 6, wherein when a voltage at the second end of the DC/DC conversion circuit is less than the voltage at the first end of the power conversion system, the power conversion system is configured to charge the energy storage unit.

8. The energy storage system according to any one of claims 1 to 7, wherein the control unit is further configured to: when the controllable switching transistor is turned off in the third time period, control the DC/DC conversion circuit to perform boost conversion on the output voltage of the energy storage unit and output an increased voltage to the power conversion system, to discharge the energy storage unit.

9. The energy storage system according to claim 8, wherein when the voltage at the second end of the DC/DC conversion circuit is greater than the voltage at the first end of the power conversion system, the power conversion system is configured to discharge the energy storage unit.

10. The energy storage system according to any one of claims 1 to 9, wherein when a transient overvoltage occurs in the voltage at the second end of the power conversion system, the control unit is configured to control the controllable switching transistor to be turned off.

11. The energy storage system according to any one of claims 1 to 10, wherein the energy storage system further comprises a voltage detection circuit;
the voltage detection circuit is configured to detect the voltage of the energy storage unit and the voltage at the second end of the power conversion system; and
the voltage detection circuit is further configured to output the detected voltage to the control unit.

12. The energy storage system according to any one of claims 1 to 11, wherein the energy storage system further comprises a fault detection circuit, and the fault detection circuit is configured to: detect a short-circuit fault of the energy storage unit, and after detecting the short-circuit fault, indicate the control unit to turn off the controllable switching transistor.

13. The energy storage system according to claim 12, wherein the controllable switching transistor is an insulated gate bipolar transistor IGBT or a device formed by connecting an IGBT and a diode in parallel, and the fault detection circuit is a desaturation detection circuit; and
when a voltage between a collector and an emitter of the IGBT is greater than a preset voltage threshold, the control unit is configured to control the IGBT to be turned off.

14. The energy storage system according to any one of claims 1 to 12, wherein the controllable switching transistor is an insulated gate bipolar transistor IGBT, or a relay, or a contactor, or a device formed by connecting an IGBT and a diode in parallel.

15. An energy storage management system, wherein the energy storage management system comprises a DC/DC conversion circuit, a controllable switching transistor, a power conversion system, and a control unit;
a first end of the controllable switching transistor is configured to connect to an energy storage power supply, a second end of the controllable switching transistor is connected to a first end of the power conversion system, a first end of the DC/DC conversion circuit is connected to the energy storage power supply, a second end of the DC/DC conversion circuit is connected to the first end of the power conversion system, a second end of the power conversion system is configured to connect to a grid connection point, and the power conversion system is configured to connect to a power grid or a load through the grid connection point;
the control unit is configured to: when an output voltage of the energy storage power supply is continuously greater than a voltage peak at the second end of the power conversion system in a first time period, control, in a second time period, the controllable switching transistor to be turned on, so that the DC/DC conversion circuit stops working, to charge or discharge the energy storage power supply by using the power conversion system; and
the control unit is configured to: when the output voltage of the energy storage power supply is less than the voltage peak at the second end of the power conversion system in a third time period, control the controllable switching transistor to be turned off, to charge or discharge the energy storage power supply by using the power conversion system and the DC/DC conversion circuit, wherein the time sequence is from the first time period to the second time period and then to the third time period.

16. The energy storage management system according to claim 15, wherein the control unit is further configured to: when the controllable switching transistor is turned on in the second time period, control the power conversion system to perform rectification conversion on the voltage at the second end of the power conversion system, so that a voltage at the second end of the controllable switching transistor is greater than the output voltage of the energy storage power supply, to charge the energy storage unit by using the controllable switching transistor.
